# EUROPEAN PATENT APPLICATION

(11) **EP 4 712 488 A1**
(43) Date of publication of application: **18.03.2026**
(21) Application number: 24822282.0
(22) Date of filing: 29.02.2024
(51) Int. Cl.: H04N 21/242

(54) **METHOD, APPARATUS, AND SYSTEM FOR SYNCHRONIZING MEDIA PLAYBACK**

(30) Priority: 15.06.2023 CN 202310714713
(71) Applicant: Huawei Technologies Co., Ltd., Shenzhen, Guangdong 518129 (CN)
(72) Inventor: ZHOU, Xiaoyun, Shenzhen, Guangdong 518129 (CN); HU, Feifei, Shenzhen, Guangdong 518129 (CN); ZHENG, Haiyang, Shenzhen, Guangdong 518129 (CN); ZHOU, Ping, Shenzhen, Guangdong 518129 (CN)
(74) Representative: Pfenning, Meinig & Partner mbB
(86) International application number: PCT/CN2024/079459
(87) International publication number: WO 2024/255324

(57) **Abstract**

A media synchronous playing method, an apparatus, and a system are provided, which relate to the field of multimedia technologies, to ensure synchronous playing start on a plurality of terminals, and improve user experience of synchronously watching or listening to a media. The method includes: A first terminal device obtains a first media index file and second segment information that are of the media, where the first media index file is obtained by the first terminal device from an accessed first index file server, and the second segment information is segment information, in a second media index file of the media, obtained by a second terminal device from a second index file server; the first terminal device determines playing start indication information based on the first media index file and the second segment information, where the playing start indication information indicates media content from which playing starts when the media is played; and the first terminal device sends the playing start indication information to the second terminal device, so that the second terminal device starts to play the media based on the playing start indication information.

## Description

This application claims priority to Chinese Patent Application No. 202310714713.3, filed with the China National Intellectual Property Administration on June 15, 2023 and entitled "MEDIA SYNCHRONOUS PLAYING METHOD, APPARATUS, AND SYSTEM", which is incorporated herein by reference in its entirety.

### TECHNICAL FIELD

Embodiments of this application relate to the field of multimedia technologies, and in particular, to a media synchronous playing method, an apparatus, and a system.

### BACKGROUND

With growth of bandwidth and improvement of hardware performance, a plurality of users may watch a same video or listen to same audio on terminals held by the plurality of users, for example, watch a ball game or watch a movie together, to achieve effect similar to that of performing watching or listening together in a real scenario. Such a watching scenario of watching the same video synchronously may be referred to as cloud watching or synchronous watching. Synchronous watching is used as an example for description below.

To ensure that users participating in synchronous watching have high watching experience, video content watched by different users needs to be kept synchronous as much as possible during video playing. In existing synchronous watching technical solutions, after video playing starts, in two parties participating in synchronous watching, a party (referred to as a controlling party) that initiates synchronous watching sends current playing progress information of the controlling party to a party (referred to as a controlled party) that is invited to participate in synchronous watching. Further, the controlled party adjusts, when determining that synchronous adjustment needs to be performed, playing progress of video content played by the controlled party, to keep the video content synchronous with video content played by the controlling party.

An existing media synchronous playing method cannot resolve a synchronization problem existing when a media starts to be played (that is, at the start of playing). In other words, an asynchronization problem still exists at the start of playing, and asynchronization of playing content at the start of playing results in poor user experience.

### SUMMARY

Embodiments of this application provide a media synchronous playing method, an apparatus, and a system, to ensure synchronous playing start on a plurality of terminals, and improve user experience of synchronously watching or listening to a media.

To achieve the foregoing objectives, the following technical solutions are used in embodiments of this application.

According to a first aspect, an embodiment of this application provides a media synchronous playing method. The method includes: A first terminal device obtains a first media index file and second segment information that are of a media, where the first media index file is obtained by the first terminal device from a first index file server, and the second segment information is segment information, in a second media index file of the media, obtained by a second terminal device from a second index file server; the first terminal device determines playing start indication information based on the first media index file and the second segment information, where the playing start indication information indicates media content from which playing starts when the media is played; and the first terminal device sends the playing start indication information to the second terminal device, so that the second terminal device starts to play the media based on the playing start indication information. In the method, the first terminal device may indicate, to the second terminal device by using the playing start indication information, the media content from which playing starts. This can ensure that when the first terminal device and the second terminal device synchronously play the media, the media content from which playing starts is the same, ensure synchronous playing start on a plurality of terminals, and improve user experience of synchronously watching or listening to the media.

In a possible implementation, the media synchronous playing method provided in this embodiment of this application further includes: The first terminal device plays the media based on the playing start indication information. Both the first terminal device and the second terminal device play the same media based on the playing start indication information. This can ensure that when the first terminal device and the second terminal device synchronously play the media, the media content from which playing starts is the same, ensure synchronous playing start on the plurality of terminals, and improve user experience of synchronously watching or listening to the media.

In a possible implementation, the second segment information is a second sequence number of a latest media segment in the second media index file; and the playing start indication information includes a third sequence number of a media segment in which the media content from which playing starts is located, the third sequence number is less than or equal to a first sequence number and less than or equal to the second sequence number, and the first sequence number is a sequence number of a latest segment in the first media index file. In this case, that the first terminal device plays the media based on the playing start indication information specifically includes: The first terminal device starts, based on a sequence number of a media segment downloaded by a first media server corresponding to the first index file server, playing from the media segment with the third sequence number. The playing start indication information indicates the sequence number of the media segment. In this way, the first terminal device can directly determine, based on the sequence number, the media segment from which playing starts, and can quickly and efficiently obtain the media segment.

In a possible implementation, the second segment information is a second start timestamp of the latest media segment in the second media index file; and the playing start indication information includes a third start timestamp of the media segment in which the media content from which playing starts is located, the third start timestamp is not later than a first start timestamp and not later than the second start timestamp, and the first start timestamp is a start timestamp of the latest segment in the first media index file; or the playing start indication information includes a first offset of a start timestamp of the media content from which playing starts relative to a start timestamp of the media, and the first offset is less than or equal to an offset of the first start timestamp relative to the start timestamp of the media and less than or equal to an offset of the second start timestamp relative to the start timestamp of the media. In this case, the first terminal device determines a fourth sequence number based on the third start timestamp or the first offset, and starts, based on the sequence number of the media segment downloaded from the first media server corresponding to the first index file server, playing from a media segment with the fourth sequence number.

In a possible implementation, the second segment information is segment information of a media segment indicated in the second media index file; and the playing start indication information includes first playing start indication information and second playing start indication information.

The first playing start indication information includes a sequence number of a first target media segment in which the media content from which playing starts is located and a second offset of start time of the media content from which playing starts relative to start time of the first target media segment, and the first target media segment is one of a media segment indicated in the first media index file. In this case, that the first terminal device plays the media based on the playing start indication information specifically includes: The first terminal device downloads the first target media segment from a first media server, and starts playing from first media content in the first target media segment, where the first media content is media content corresponding to a fourth timestamp indicated by the second offset.

In a possible implementation, the second segment information is the segment information of the media segment indicated in the second media index file; and the playing start indication information includes a fourth offset of the start time of the media content from which playing starts relative to start time of the media, and the fourth offset is less than or equal to an offset of the start timestamp of the first target media segment relative to the start timestamp of the media and less than or equal to an offset of the start timestamp of the second target media segment relative to the start timestamp of the media. In this case, that the first terminal device plays the media based on the playing start indication information specifically includes: The first terminal device determines a fifth sequence number based on the fourth offset, and starts, based on a sequence number of a media segment downloaded from the first media server, playing from second media content in a media segment with the fifth sequence number, where the second media content is media content corresponding to a fifth timestamp indicated by the fourth offset.

In conclusion, content of the playing start indication information is diversified, for example, may be the sequence number of the media segment, the start timestamp of the media segment, or the related offset. A user can flexibly perform selection based on an actual requirement.

In a possible implementation, the playing start indication information further includes playing start time information, and the playing start time information indicates system time at which the media content starts to be played. In this case, that the first terminal device plays the media based on the playing start indication information specifically includes: When system time reaches the time indicated by the playing start time information, the first terminal device starts to play the downloaded media segment. The system time for starting the media content is configured, so that the terminal device plays the media based on the configured system time. This can further ensure synchronous playing start in a case in which the media is played on the plurality of terminals.

In a possible implementation, before the first terminal device obtains the first media index file and the second segment information, the media synchronous playing method provided in this embodiment of this application further includes: The first terminal device sends a synchronous playing request to the second terminal device, where the synchronous playing request is used to request the second terminal device to synchronously play the media with the first terminal device.

In a possible implementation, that the first terminal device obtains the second segment information of the media specifically includes: The first terminal device receives the second segment information of the media from the second terminal device; or the first terminal device determines the second segment information based on the first media index file, location information of the first index file server, and location information of the second index file server.

In a possible implementation, that the first terminal device determines the second segment information based on the first media index file, the location information of the first index file server, and the location information of the second index file server specifically includes: The first terminal device determines a delay between the first index file server and the second index file server based on the location information of the first index file server and the location information of the second index file server; and determines the second segment information based on the first media index file and the delay between the first index file server and the second index file server. In this implementation, the second terminal device does not need to send the second segment information to the first terminal device, and the first terminal device determines the second segment information by the first terminal device. This can reduce overheads of the second terminal device.

According to a second aspect, an embodiment of this application provides a media synchronous playing method. The method includes: A second terminal device sends second segment information of a media to a first terminal device, where the second segment information is segment information, in a second media index file of the media, obtained by the second terminal device from a second index file server; the second terminal device receives, from the first terminal device, playing start indication information of the media, where the playing start indication information indicates media content from which playing starts when the media is played, the playing start indication information is determined based on a first media index file and the second segment information that are of the media, and the first media index file is obtained by the first terminal device from a first index file server; and the second terminal device plays the media based on the playing start indication information. In the method, the second terminal device plays the media based on the playing start indication information indicated by the first terminal device. This can ensure that when the first terminal device and the second terminal device synchronously play the media, the media content from which playing starts is the same, ensure synchronous playing start on a plurality of terminals, and improve user experience of synchronously watching or listening to the media.

In a possible implementation, the second segment information is a second sequence number of a latest media segment in the second media index file; and the playing start indication information includes a third sequence number of a media segment in which the media content from which playing starts is located, the third sequence number is less than or equal to a first sequence number and less than or equal to the second sequence number, and the first sequence number is a sequence number of a latest segment in the first media index file. In this case, that the second terminal device plays the media based on the playing start indication information specifically includes: The second terminal device starts, based on a sequence number of a media segment downloaded by a second media server corresponding to the second index file server, playing from the media segment with the third sequence number. The playing start indication information indicates the sequence number of the media segment. In this way, the first terminal device can directly determine, based on the sequence number, the media segment from which playing starts, and can quickly and efficiently obtain the media segment.

In a possible implementation, the second segment information is a second start timestamp of the latest media segment in the second media index file; and the playing start indication information includes a third start timestamp of the media segment in which the media content from which playing starts is located, the third start timestamp is not later than a first start timestamp and not later than the second start timestamp, and the first start timestamp is a start timestamp of the latest segment in the first media index file; or the playing start indication information includes a first offset of start time of the media content from which playing starts relative to start time of the media, and the first offset is less than or equal to an offset of the first start timestamp relative to the start timestamp of the media and less than or equal to an offset of the second start timestamp relative to the start timestamp of the media. In this case, that the second terminal device plays the media based on the playing start indication information specifically includes: The second terminal device determines a fourth sequence number based on the third start timestamp or the first offset, and starts, based on the sequence number of the media segment downloaded by the second media server, playing from a media segment with the fourth sequence number.

In a possible implementation, the second segment information is segment information of a media segment indicated in the second media index file; and the playing start indication information includes a sequence number of a second target media segment in which the media content from which playing starts is located and a third offset of start time of the media content from which playing starts relative to start time of the second target media segment, and the second target media segment is one of the media segment indicated in the second media index file. In this case, that the second terminal device plays the media based on the playing start indication information specifically includes: The second terminal device downloads the second target media segment from a second media server, and starts playing from third media content in the second target media segment, where the third media content is media content corresponding to a sixth timestamp indicated by the third offset.

In a possible implementation, the second segment information is the segment information of the media segment indicated in the second media index file; and the playing start indication information includes a fourth offset of the start time of the media content from which playing starts relative to start time of the media, the fourth offset is less than or equal to an offset of a start timestamp of a first target media segment relative to the start timestamp of the media and less than or equal to an offset of the start timestamp of the second target media segment relative to the start timestamp of the media, the first target media segment is one of a media segment indicated in the first media index file, and the media segment is a media content from which playing starts is located. In this case, that the second terminal device plays the media based on the playing start indication information specifically includes: The second terminal device determines a sixth sequence number based on the fourth offset, and starts, based on a sequence number of a media segment downloaded from the second media server, playing from fourth media content in a media segment with the sixth sequence number, where the fourth media content is media content corresponding to a seventh timestamp indicated by the fourth offset.

In conclusion, content of the playing start indication information is diversified, for example, may be the sequence number of the media segment, the start timestamp of the media segment, or the related offset. A user can flexibly perform selection based on an actual requirement.

In a possible implementation, the playing start indication information further includes playing start time information, and the playing start time information indicates system time at which the media content starts to be played. In this case, that the second terminal device plays the media based on the playing start indication information specifically includes: When system time reaches the time indicated by the playing start time information, the second terminal device starts to play the downloaded media segment. The system time for starting the media content is configured, so that the terminal device plays the media based on the configured system time. This can further ensure synchronous playing start in a case in which the media is played on the plurality of terminals.

In a possible implementation, before the second terminal device sends the second segment information of the media to the first terminal device, the media synchronous playing method provided in this embodiment of this application further includes: The second terminal device receives a synchronous playing request sent by the first terminal device, where the synchronous playing request is used to request the second terminal device to synchronously play the media with the first terminal device.

According to a third aspect, an embodiment of this application provides a terminal device. The terminal device is referred to as a first terminal device, and the first terminal device includes an obtaining module, a determining module, and a sending module. The obtaining module is configured to obtain a first media index file and second segment information that are of a media, where the first media index file is obtained by the first terminal device from a first index file server, and the second segment information is segment information, in a second media index file of the media, obtained by a second terminal device from a second index file server. The determining module is configured to determine playing start indication information based on the first media index file and the second segment information, where the playing start indication information indicates media content from which playing starts when the media is played. The sending module is configured to send the playing start indication information to the second terminal device.

In a possible implementation, the first terminal device further includes a media output module. The media output module is configured to play the media based on the playing start indication information.

In a possible implementation, the second segment information is a second sequence number of a latest media segment in the second media index file; and the playing start indication information includes a third sequence number of a media segment in which the media content from which playing starts is located, the third sequence number is less than or equal to a first sequence number and less than or equal to the second sequence number, and the first sequence number is a sequence number of a latest segment in the first media index file. The media output module is specifically configured to start, based on a sequence number of a media segment downloaded from a first media server corresponding to the first index file server, playing from the media segment with the third sequence number.

In a possible implementation, the second segment information is a second start timestamp of the latest media segment in the second media index file; and the playing start indication information includes a third start timestamp of the media segment in which the media content from which playing starts is located, the third start timestamp is not later than a first start timestamp and not later than the second start timestamp, and the first start timestamp is a start timestamp of the latest segment in the first media index file; or the playing start indication information includes a first offset of a start timestamp of the media content from which playing starts relative to a start timestamp of the media, and the first offset is less than or equal to an offset of the first start timestamp relative to the start timestamp of the media and less than or equal to an offset of the second start timestamp relative to the start timestamp of the media. Further, the obtaining module is specifically configured to determine a fourth sequence number based on a third start timestamp or the first offset, and the media output module is specifically configured to start, based on the sequence number of the media segment downloaded from the first media server corresponding to the first index file server, playing from a media segment with the fourth sequence number.

In a possible implementation, the second segment information is segment information of a media segment indicated in the second media index file; and the playing start indication information includes first playing start indication information and second playing start indication information.

The first playing start indication information includes a sequence number of a first target media segment in which the media content from which playing starts is located and a second offset of start time of the media content from which playing starts relative to start time of the first target media segment, the first target media segment is one of a media segment indicated in the first media index file. The obtaining module is further configured to download the first target media segment from a first media server, and the media output module is specifically configured to start playing from first media content in the first target media segment, where the first media content is media content corresponding to a fourth timestamp indicated by the second offset.

In a possible implementation, the second segment information is the segment information of the media segment indicated in the second media index file; and the playing start indication information includes a fourth offset of the start time of the media content from which playing starts relative to start time of the media, and the fourth offset is less than or equal to an offset of the start timestamp of the first target media segment relative to the start timestamp of the media and less than or equal to an offset of the start timestamp of the second target media segment relative to the start timestamp of the media. The obtaining module is further configured to determine a fifth sequence number based on the fourth offset, and the media output module is specifically configured to start, based on a sequence number of a media segment downloaded from the first media server, playing from second media content in a media segment with the fifth sequence number, where the second media content is media content corresponding to a fifth timestamp indicated by the fourth offset.

In a possible implementation, the playing start indication information further includes playing start time information, and the playing start time information indicates system time at which the media content starts to be played. The media output module is further configured to: when system time reaches the time indicated by the playing start time information, start to play the downloaded media segment.

In a possible implementation, the sending module is further configured to send a synchronous playing request to the second terminal device, where the synchronous playing request is used to request the second terminal device to synchronously play the media with the first terminal device.

In a possible implementation, the first terminal device further includes a receiving module, and the receiving module is configured to receive the second segment information of the media from the second terminal device.

In a possible implementation, the obtaining module is specifically configured to determine the second segment information based on the first media index file, location information of the first index file server, and location information of the second index file server.

In a possible implementation, the obtaining module is specifically configured to: determine a delay between the first index file server and the second index file server based on the location information of the first index file server and the location information of the second index file server; and determine the second segment information based on the first media index file and the delay between the first index file server and the second index file server.

According to a fourth aspect, an embodiment of this application provides a terminal device. The second terminal device includes a sending module, a receiving module, and a media output module. The sending module is configured to send second segment information of a media to a first terminal device, where the second segment information is segment information, in a second media index file of the media, obtained by the second terminal device from a second index file server. The receiving module is configured to receive, from the first terminal device, playing start indication information of the media, where the playing start indication information indicates media content from which playing starts when the media is played, the playing start indication information is determined based on a first media index file of the media and the second segment information, and the first media index file is obtained by the first terminal device from a first index file server. The media output module is configured to play the media based on the playing start indication information.

In a possible implementation, the first terminal device further includes an obtaining module. The second segment information is a second sequence number of a latest media segment in the second media index file; and the playing start indication information includes a third sequence number of a media segment in which the media content from which playing starts is located, the third sequence number is less than or equal to a first sequence number and less than or equal to the second sequence number, and the first sequence number is a sequence number of a latest segment in the first media index file. In this case, the media output module is specifically configured to start, based on a sequence number of a media segment downloaded from a second media server corresponding to the second index file server, playing from the media segment with the third sequence number.

In a possible implementation, the second segment information is a second start timestamp of the latest media segment in the second media index file; and the playing start indication information includes a third start timestamp of the media segment in which the media content from which playing starts is located, the third start timestamp is not later than a first start timestamp and not later than the second start timestamp, and the first start timestamp is a start timestamp of the latest segment in the first media index file; or the playing start indication information includes a first offset of start time of the media content from which playing starts relative to start time of the media, and the first offset is less than or equal to an offset of the first start timestamp relative to the start timestamp of the media and less than or equal to an offset of the second start timestamp relative to the start timestamp of the media. In this case, the obtaining module is configured to: determine a fourth sequence number based on the third start timestamp or the first offset, and start, based on the sequence number of the media segment downloaded from the second media server, playing from a media segment with the fourth sequence number.

In a possible implementation, the second segment information is segment information of a media segment indicated in the second media index file; and the playing start indication information includes a sequence number of a second target media segment in which the media content from which playing starts is located and a third offset of start time of the media content from which playing starts relative to start time of the second target media segment, and the second target media segment is one of the media segment indicated in the second media index file. The obtaining module is configured to download the second target media segment from a second media server, and the media output module is specifically configured to start playing from third media content in the second target media segment, where the third media content is media content corresponding to a sixth timestamp indicated by the third offset.

In a possible implementation, the second segment information is the segment information of the media segment indicated in the second media index file; and the playing start indication information includes a fourth offset of the start time of the media content from which playing starts relative to start time of the media, the fourth offset is less than or equal to an offset of a start timestamp of a first target media segment relative to the start timestamp of the media and less than or equal to an offset of the start timestamp of the second target media segment relative to the start timestamp of the media, and the first target media segment is a media segment in which the media content from which playing starts is located in the first media index file. The obtaining module is configured to determine a sixth sequence number based on the fourth offset, and the media output module is specifically configured to start, based on a sequence number of a media segment downloaded from the second media server, playing from fourth media content in a media segment with the sixth sequence number, where the fourth media content is media content corresponding to a seventh timestamp indicated by the fourth offset.

In a possible implementation, the playing start indication information further includes playing start time information, and the playing start time information indicates system time at which the media content starts to be played. The media output module is further configured to: when system time reaches the time indicated by the playing start time information, start to play the downloaded media segment.

In a possible implementation, the receiving module is further configured to receive a synchronous playing request sent by the first terminal device, where the synchronous playing request is used to request the second terminal device to synchronously play the media with the first terminal device.

According to a fifth aspect, an embodiment of this application provides a terminal device, including a memory and at least one processor connected to the memory. The memory is configured to store computer program code, the computer program code includes computer instructions, and when the computer instructions are executed by the at least one processor, the terminal device is enabled to perform the method according to any one of the first aspect and the possible implementations of the first aspect or the method according to any one of the second aspect and the possible implementations of the second aspect.

According to a sixth aspect, an embodiment of this application provides a computer-readable storage medium. The computer-readable storage medium stores computer instructions. When the computer instructions are run on a computer, the method according to any one of the first aspect and the possible implementations of the first aspect or the method according to any one of the second aspect and the possible implementations of the second aspect is performed.

According to a seventh aspect, an embodiment of this application provides a computer program product. The computer program product includes computer instructions. When the computer instructions are run on a computer, the method according to any one of the first aspect and the possible implementations of the first aspect or the method according to any one of the second aspect and the possible implementations of the second aspect is performed.

According to an eighth aspect, an embodiment of this application provides a chip system, including a processor, configured to invoke and run a computer program from a memory, so that a terminal device on which the chip system is installed performs the method according to any one of the first aspect and the possible implementations of the first aspect or the method according to any one of the second aspect and the possible implementations of the second aspect.

According to a ninth aspect, an embodiment of this application provides a communication system, including a first terminal device, a second terminal device, a first index file server, a second index file server, a first media server, and a second media server. The first terminal device is configured to perform the method according to any one of the first aspect and the possible implementations of the first aspect, and the second terminal device is configured to perform the method according to any one of the second aspect and the possible implementations of the second aspect.

It should be understood that, for beneficial effect achieved by the technical solutions of the third aspect to the ninth aspect and corresponding possible implementations of the technical solutions of the third aspect to the ninth aspect of this application, refer to the technical effect of the first aspect and the second aspect and the corresponding possible implementations of the first aspect and the second aspect. Details are not described herein again.

### BRIEF DESCRIPTION OF DRAWINGS

FIG. 1 is a diagram of an architecture of a streaming media transmission system according to an embodiment of this application;
FIG. 2 is a diagram of a media index file in an HLS streaming protocol according to an embodiment of this application;
FIG. 3 is a diagram of a content delivery network according to an embodiment of this application;
FIG. 4 is a diagram of an architecture of a media synchronous playing system according to an embodiment of this application;
FIG. 5 is a diagram of a hardware structure of a mobile phone according to an embodiment of this application;
FIG. 6 is a diagram 1 of a media synchronous playing method according to an embodiment of this application;
FIG. 7 is a diagram of an architecture of another media synchronous playing system according to an embodiment of this application;
FIG. 8A to FIG. 8C are a diagram 2 of a media synchronous playing method according to an embodiment of this application;
FIG. 9A to FIG. 9C are a diagram 3 of a media synchronous playing method according to an embodiment of this application;
FIG. 10A to FIG. 10C are a diagram 4 of a media synchronous playing method according to an embodiment of this application;
FIG. 11A to FIG. 11C are a diagram 5 of a media synchronous playing method according to an embodiment of this application;
FIG. 12 is a diagram 1 of a structure of a first terminal device according to an embodiment of this application;
FIG. 13 is a diagram 2 of a structure of a first terminal device according to an embodiment of this application;
FIG. 14 is a diagram 1 of a structure of a second terminal device according to an embodiment of this application; and
FIG. 15 is a diagram 2 of a structure of a second terminal device according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects.

In embodiments of this application, the word "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two.

First, some concepts and background knowledge related to a media synchronous playing method, an apparatus, and a system provided in embodiments of this application are explained.

### 1. Media synchronous playing

The media synchronous playing on a plurality of terminals can enable many people to watch or listen to a same media (the media such as a video and audio) at the same time across terminals and/or across regions. Therefore, even if a plurality of users are at different locations, the plurality of users can simultaneously watch a same video or simultaneously listen to same audio on terminal devices held by the plurality of users. Multi-person simultaneous watching of a same video is synchronous watching, and synchronous watching can achieve effect similar to that of watching a video together in a real scenario.

It should be noted that the media in embodiments of this application includes a video and/or audio, and may also be referred to as streaming media, a video and audio stream, or another name. This is not limited herein.

### 2. HLS streaming protocol and DASH streaming protocol

Both the hypertext transfer protocol live streaming (HTTP live streaming, HLS) streaming protocol and the dynamic adaptive streaming over hypertext transfer protocol (dynamic adaptive streaming over HTTP, DASH) streaming protocol are HTTP-based streaming media network streaming protocols. HTTP is the hypertext transfer protocol (hypertext transfer protocol).

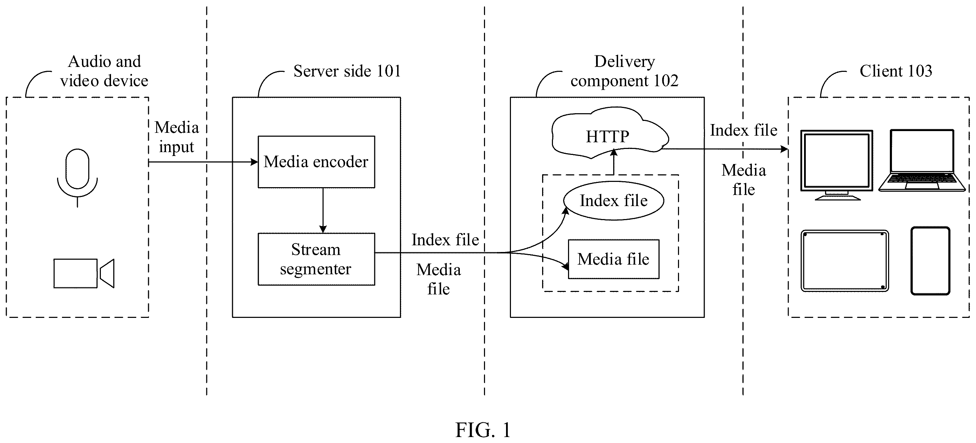

Refer to a diagram of an architecture of a streaming media transmission system shown in FIG. 1, both the HLS streaming protocol and the DASH streaming protocol are applicable to the system. The system includes a server side 101, a delivery component 102, and a client 103. The server side 101 includes a media encoder (media encoder) and a stream segmenter (stream segmenter).

With reference to FIG. 1, a basic principle of media delivery based on the HLS and the DASH is as follows:
The server side 101 obtains a media (which may be a video stream or an audio stream) input from an audio and video device (for example, a microphone or a camera). Then, the media encoder of the server side 101 encodes, based on different bit rates, the streaming media into a format appropriate for delivery by the delivery component 102. Further, the stream segmenter segments an encoded media stream into a plurality of small media files (which may be ts files or fmp4 files), also be referred to as media segments, and sequentially sends the media files to a server of the delivery component 102 for storage. The media files at different bit rates are used as backup media files for selection by the client 103. Duration of a media segment is determined based on a configuration. For example, a time length of each segment may be 2 seconds, 4 seconds, 6 seconds, or the like.

Further, the stream segmenter creates an index file including pointers to these small media files, for example, writes play addresses (for example, uniform resource locators (uniform resource locators, URLs)) of these media files into the index file in a play sequence, and places the index file in the server of the delivery component 102 for storage. Optionally, the stream segmenter may further encrypt each media file generated by the stream segmenter, generate a corresponding key file, and store the key file in the server of the delivery component 102.

The delivery component 102 sends, to the client 103 by using the HTTP, the index file, of the media, requested by the client 103. Then, the client 103 selects, based on bandwidth and a performance limit of the client, a media file with an appropriate bit rate from the backup media files with the different bit rates of the same media content, and downloads the media file from the server of the delivery component 102 and plays the media file. Specifically, after selecting, based on the index file, the media file with the appropriate bit rate, the client 103 sends a URL of the media file to the delivery component 102. The delivery component 102 sends, to the client 103, the media file corresponding to the URL.

It should be understood that, in the HLS streaming protocol, the index file of the plurality of media files of the media is a m3u8 file, and in the DASH streaming protocol, the index file is an MPD file.

The media index file (namely, the m3u8 file) in the HLS streaming protocol is a hierarchical index file, including a level-1 index file and a level-2 index file. The level-1 index file is referred to as a master playlist (Master Playlist), and the level-2 index file is a media playlist. Specifically, the master playlist stores an address of a media playlist (Media Playlist), for example, a URL of the media playlist. Each URL of each media playlist corresponds to one media playlist. The media playlist stores an address of each media file (or media segment) of the media at a bit rate, for example, a URL of the media segment.

The media index file (namely, the MPD file) in the DASH streaming protocol stores addresses of the media files of the media at all bit rates, without a concept of hierarchical levels.

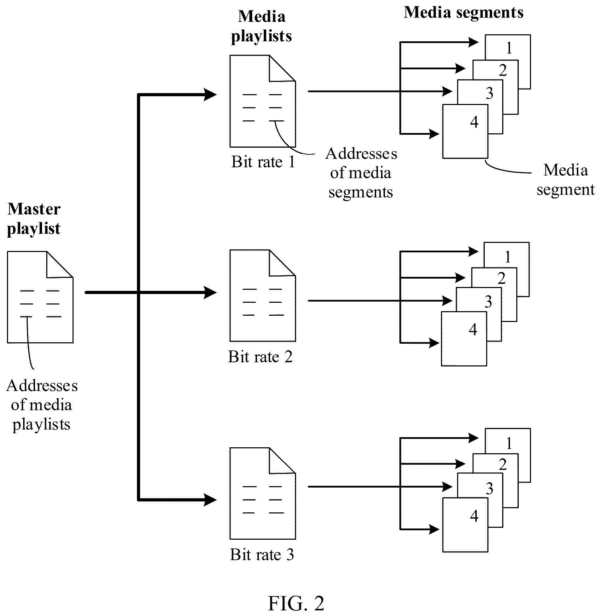

Refer to FIG. 2. The media index file (namely, the m3u8 file) in the HLS streaming protocol is used as an example below to briefly describe a principle of using the media index file.

After obtaining a URL of the master playlist of the media, the client obtains the master playlist according to the URL of the master playlist, obtains, from the master playlist based on an actual requirement, a URL of a media playlist corresponding to a bit rate, obtains the media playlist (including a URL of each media segment at the bit rate) according to the URL of the media playlist, obtains the URL of the video segment from the media playlist, downloads the video segment according to the URL of the video segment, and plays the video segment.

### 3. Content delivery network (Content delivery network, CDN)

The delivery component in FIG. 1 may be the CDN. The CDN is a virtual network constructed on an existing network by using a CDN technology. A core point of the CDN is to cache resources (for example, data) on CDN nodes of the CDN. When a user performs access, the user obtains a required resource from a nearby CDN node accessed by the user. This can reduce network congestion, and improve a response speed and a hit rate of user access.

A multi-layer CDN, for example, a two-layer CDN or a three-layer CDN, may be constructed in one management domain (or referred to as a service management domain).

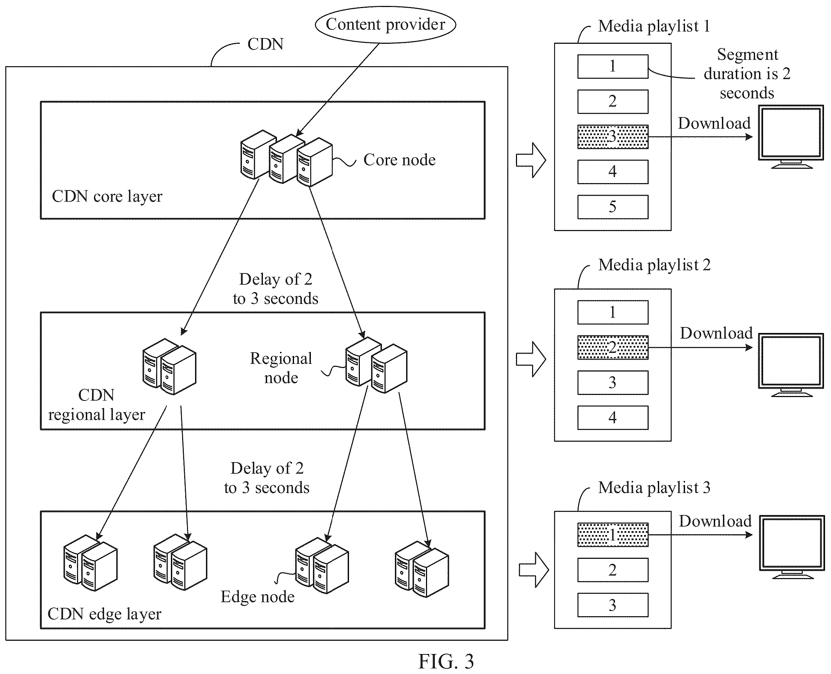

In embodiments of this application, a three-layer CDN is used as an example for description. As shown in FIG. 3, in the three-layer CDN, a management domain is divided into three layers based on locations, namely, a CDN core layer, a CDN regional layer, and a CDN edge layer. The CDN core layer includes one core node, the CDN regional layer includes one or more regional nodes, and the CDN edge layer includes one or more edge nodes.

In embodiments of this application, CDN nodes in a specified area can be managed in a unified manner. The unified management area may be understood as a service management domain. Generally, a province is used as a service management domain. For example, in an implementation, the CDN core layer corresponds to a prefecture-level city in a province, the CDN regional layer corresponds to a district except the prefecture-level city, and the CDN edge layer corresponds to a county. Generally, for a same service, the core node in the service management domain segments a media and sends segments to a lower-layer node. Therefore, duration of media segments at different layers in the same service management domain is the same. Core nodes in different service management domains may have different duration of media segments.

Optionally, each node (which may also be referred to as a CDN node) in the CDN may be implemented by using one or more servers.

In the CDN, the core node has functions such as load balancing, content delivery, and scheduling. With reference to FIG. 3, in embodiments of this application, the core node continuously obtains a media from a content provider. A server in the core node encodes the media based on different bit rates, segments the media into media segments (the server in the core node performs a function of the server side in FIG. 1), stores the media segments in the core node, and continuously adds an address of the media segment to a media playlist corresponding to the media segment, so as to update the media playlist. In addition, the core node further sends the media segment to the regional node at a next layer. Similarly, the regional node also stores the media segment and updates a media playlist in the regional node. Then, the regional node sends the media segment to the edge node at a next layer, and the regional node stores the media segment and updates a media playlist in the regional node.

Optionally, different servers in the CDN have different functions. For example, for each CDN node, the CDN node includes an index file server and a media server, where the index file server is configured to store the media index file (including the master playlist and the media playlist, namely, the m3u8 file, or including the MPD file). The media server is configured to store a media file of the media.

In a synchronous watching scenario, when a media jointly played by a plurality of clients (namely, a plurality of terminal devices) is synchronized, users have good watching experience. In all existing synchronous watching technical solutions, after a media starts to be played, that is, in a process of playing a media, progresses of a plurality of clients are adjusted to a same progress, to ensure synchronization.

In the conventional technology, a synchronization server may synchronously establish a synchronization group including a terminal of a controlling party (a party that initiates synchronous watching) and a terminal of a controlled party (a party that is invited to participate in synchronous watching). The synchronization server receives, in real time, playing progress information (a timestamp of media content) reported by the controlling party terminal and playing progress information reported by the controlled party terminal, and then calculates an error between playing progress of the controlled party terminal and playing progress of the controlling party terminal. If the error exceeds a preset threshold, the synchronization server indicates the controlled party terminal to adjust the playing progress, so that the progress of the controlled party terminal is consistent with the progress of the media content played by the controlling party terminal, to implement synchronization.

The foregoing manner is a method for synchronizing the media content in a synchronous watching process. The method can only resolve an asynchronization problem in the synchronous watching process. In addition, in the synchronous watching process, there is also a problem of inconsistent media content from which playing starts.

Specifically, with reference to the foregoing content and FIG. 3, if duration of each media segment is 2 seconds, the core node stores the media segment and synchronously updates the media playlist 1. A regional node server at the regional layer periodically (usually every 1 to 2 seconds) obtains the media playlist 1 from the core node. If determining that the media playlist 1 is updated, the regional node server obtains a new media segment from the core node according to a new address, stores the new media segment, and updates a media playlist 2. The edge node at the edge area periodically (usually every 1 to 2 seconds) obtains the media playlist 2 from the regional node. If determining that the media playlist 2 is updated, the edge node obtains a new media segment from the regional node according to a new address, stores the new media segment, and updates a media playlist 3.

It should be understood that there is a specific delay between CDN nodes at different layers. For example, there is a delay of 2 to 3 seconds between the regional node and the core node, and there is also a delay of 2 to 3 seconds between the edge node and the regional node. In this way, when CDNs accessed by a client are at different layers, the client obtains different media playlists, and therefore can obtain different media segments. For example, it is assumed that there is a delay of 2 seconds between CDN nodes, at a moment, a core node has stored five media segments (for example, a segment 1, a segment 2, a segment 3, a segment 4, and a segment 5), a regional node may store only four media segments (for example, the segment 1, the segment 2, the segment 3, and the segment 4), and an edge node may store only three media segments (for example, the segment 1, the segment 2, and the segment 3). In this case, media segments that can be obtained by a client accessed to the core node include five media segments, and a media playlist includes addresses of the five media segments. Media segments that can be obtained by a client accessed to the regional node include the four media segments, and a media playlist includes addresses of the four media segments. Media segments that can be obtained by a client accessed to the edge node include the three media segments, and a media playlist includes addresses of the three media segments.

As an example, when the client starts to access a live service, after the client obtains a media playlist from an index file server in a CDN node accessed by the client, to ensure media playing continuity, the client usually downloads, starting from a media segment indicated by a third or fourth address from the end in the media playlist, the media segment from a media server in the CDN node and plays the media segment. For example, downloading starts from the third media segment from the end. For example, at the same moment, the client accessed to the core node performs downloading starting from a media segment numbered 3 (3 is a sequence number of the media segment), the client accessed to the regional node performs downloading starting from a media segment numbered 2, and the client accessed to the edge node performs downloading starting from a media segment numbered 1.

Based on the foregoing content, in the synchronous watching scenario, when CDN nodes accessed by clients participating in synchronous watching are at different CDN layers, media segments from which the clients start playing are different. The foregoing example is still used. A media segment from which the client accessed to the core node starts playing is the media segment numbered 3, and a media segment from which the client accessed to the edge node starts playing is the media segment numbered 1. The two media segments are different by two media segments, and duration of a media segment is 2 seconds. It can be learned that media content from which the client accessed to the core node and the client accessed to the edge node starts playing is different by 4 seconds. When duration of the media segment is larger, multimedia content from which playing starts is different by a larger difference. As a result, pictures watched at the start of playing are different, and user experience is affected.

In conclusion, in the synchronous watching scenario, it is an urgent problem to ensure that all terminal devices participating in synchronous watching are synchronized at the start of playing.

For the foregoing problem, embodiments of this application provide a media synchronous playing method, an apparatus, and a system. A controlling party (referred to as a first terminal device) participating in synchronous watching obtains a first media index file of a media from an index file server of a first CDN node accessed by the first terminal device, and obtains segment information (referred to as second segment information), in a second media index file of the media, obtained by a second terminal device from an index file server of a second CDN node accessed by the second terminal device. Then, the first terminal device determines playing start indication information based on the first media index file and the second segment information. The playing start indication information indicates media content from which playing starts when the media is played. Further, the first terminal device sends the playing start indication information to the second terminal device, so that the second terminal device starts to play the media based on the playing start indication information. In the method, the first terminal device may indicate, to the second terminal device by using the playing start indication information, the media content from which playing starts. This can ensure that when the first terminal device and the second terminal device synchronously play the media, the media content from which playing starts is the same. That is, the method ensures synchronous playing start on a plurality of terminals, and improve user experience of synchronously watching or listening to the media.

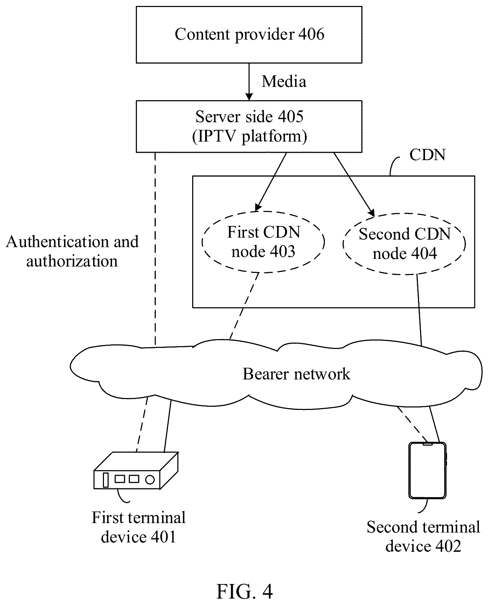

FIG. 4 is a diagram of an architecture of a media synchronous playing system according to an embodiment of this application. The system includes a plurality of terminal devices (for example, a first terminal device 401 and a second terminal device 402), a first CDN node 403 (including a first index file server and a first media server), a second CDN node 404 (including a second index file server and a second media server), a server side 405, and a content provider 406. Optionally, the index file server and the media server in the first CDN node 403 may be separately disposed, or may be jointly disposed, and the index file server and the media server in the second CDN node 404 may be separately disposed, or may be jointly disposed. The index file server is configured to generate, store, and deliver an index file (for example, an MPD file or a m3u8 file). The index file server may also be referred to as an index file delivery function. The media server is configured to deliver a media segment, and may also be referred to as a segment delivery function.

The content provider 406 is configured to provide a media (for example, a video stream) for the server side 405, and the server side 405 includes a plurality of media resources. Optionally, the server side 405 may be an internet protocol television (internet protocol television, IPTV) platform.

The first CDN node 403 is a CDN node accessed by the first terminal device 401, and the second CDN node 404 is a CDN node accessed by the second terminal device 402. The first CDN node 403 and the second CDN node 404 may be CDN nodes in a same management domain, or may be CDN nodes in different management domains. When the first CDN node 403 and the second CDN node 404 are the CDN nodes in the same management domain, the first CDN node and the second CDN node may be CDN nodes at a same layer or CDN nodes at different layers. This is not limited in embodiments of this application.

If the server side 405 is the IPTV platform, the first terminal device 401 and the second terminal device 402 each are a terminal device running a TPTV application (for example, an IPTV App), for example, a set-top box, a mobile phone (the mobile phone has an IPTV SDK), or the like. For example, in FIG. 1, the first terminal device 401 is a set-top box, and the second terminal device 402 is a mobile phone. It can be understood that after the set-top box is started, a menu combining images and texts, namely, an electronic program guide (electronic program guide, EPG), may be displayed on a television screen connected to the set-top box. A user can quickly select, by using the EPG, a media program to be watched. Similarly, after the mobile phone starts the IPTV application, an interface of the mobile phone may also display the EPG, to allow the user to select a media program.

Before media synchronous playing is performed, the first terminal device 401 and the second terminal device 402 each need to perform authentication and authorization on the server side 405 (for example, the IPTV platform), to establish a communication connection to the server side 405 (refer to a dashed line in FIG. 4).

Based on the architecture in FIG. 4, in an implementation, the first terminal device 401 may initiate media synchronous playing (for example, synchronous watching) to the second terminal device 402, to perform the media synchronous playing method provided in embodiments of this application, so that the first terminal device 401 and the second terminal device 402 can synchronize playing start when performing synchronous watching or synchronously listening to audio.

It should be noted that a communication connection needs to be established between the first terminal device 401 and the second terminal device 402. Optionally, the communication connection is a communication connection that has been established between the first terminal device 401 and the second terminal device 402 before the first terminal device 401 determines to initiate media synchronous playing, for example, real-time communication (real-time communication, RTC), or the communication connection is a real-time communication connection established between the first terminal device 401 and the second terminal device 402 after the first terminal device 401 determines to initiate media synchronous playing. The communication connection between the first terminal device 401 and the second terminal device 402 is not shown in FIG. 4.

It should be understood that the server side 405, the first CDN node 403, and the second CDN node 404 communicate with the first terminal device 401 and the second terminal device 402 separately by using a bearer network.

Optionally, the first terminal device 401 and the second terminal device 402 may be set-top boxes, mobile phones, tablet computers, personal computers (Ultra-mobile Personal Computers, UMPCs), or the like. Alternatively, the first terminal device 401 and the second terminal device 402 may be other desktop devices, laptop devices, handheld devices, wearable devices, smart home devices, vehicle-mounted devices, and the like, for example, netbooks, smartwatches, smart cameras, netbooks, personal digital assistants (Personal Digital Assistants, PDAs), portable multimedia players (Portable Multimedia Players, PMPs), dedicated media players, or AR (augmented reality)/VR (virtual reality) devices. A specific type, structure, and the like of the terminal device are not limited in embodiments of this application.

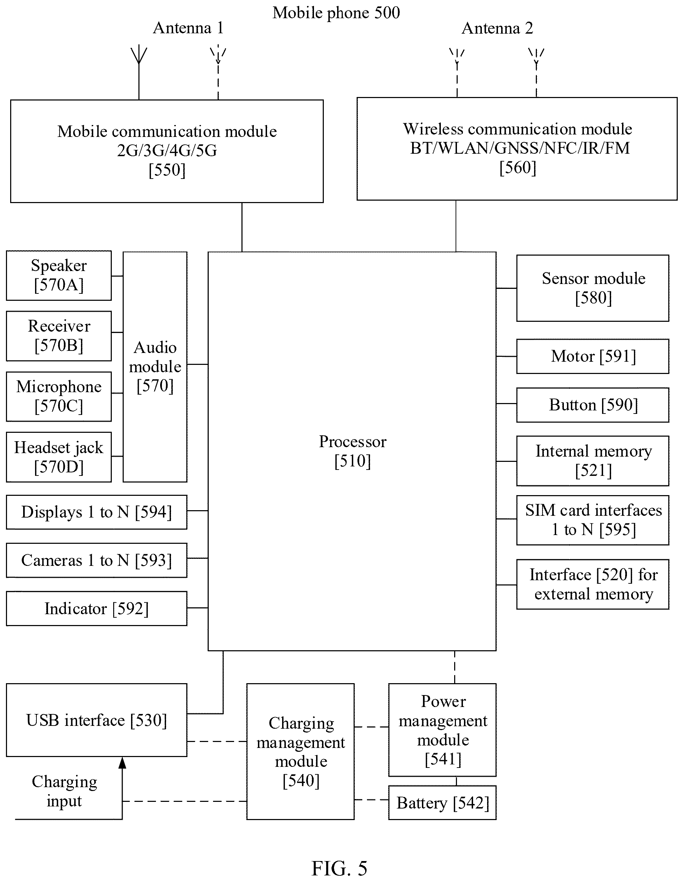

For example, the terminal device is a mobile phone. FIG. 5 is a diagram of a hardware structure of a mobile phone 500 according to an embodiment of this application. The mobile phone 500 includes a processor 510, an interface 520 for external memory, an internal memory 521, a universal serial bus (universal serial bus, USB) interface 530, a charging management module 540, a power management module 541, a battery 542, an antenna 1, an antenna 2, a mobile communication module 550, a wireless communication module 560, an audio module 570, a speaker 570A, a receiver 570B, a microphone 570C, a headset jack 570D, a sensor module 580, a button 590, a motor 591, an indicator 592, a camera 593, a display 594, a subscriber identity module (subscriber identification module, SIM) card interface 595, and the like. The sensor module 580 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor 280L, a bone conduction sensor, and the like.

It may be understood that the structure shown in this embodiment of this application constitutes no specific limitation on the mobile phone 500. In some other embodiments of this application, the mobile phone 500 may include more or fewer components than those shown in the figure, or some components may be combined, or some components may be split, or there may be a different component layout. The components shown in the figure may be implemented by hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone 500. The controller may generate an operation control signal based on an instruction operation code and a time sequence signal, to complete control of instruction reading and instruction execution.

A memory may be further disposed in the processor 510, and is configured to store instructions and data. In some embodiments, the memory in the processor 510 is a cache. The memory may store instructions or data that have/has been used or are/is cyclically used by the processor 510. If the processor 510 needs to use the instructions or the data again, the processor may directly invoke the instructions or the data from the memory. This avoids repeated access, reduces waiting time of the processor 510, and therefore improves system efficiency.

In some embodiments, the processor 510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and constitutes no limitation on the structure of the mobile phone 500. In some other embodiments of this application, the mobile phone 500 may alternatively use an interface connection manner different from that in the foregoing embodiment, or a combination of a plurality of interface connection manners.

The charging management module 540 is configured to receive a charging input from the charger. The charging management module 540 supplies power to an electronic device through the power management module 541 while charging the battery 542.

The power management module 541 is configured to connect the battery 542, the charging management module 540, and the processor 510. The power management module 541 receives an input of the battery 542 and/or an input of the charging management module 540, and supplies power to the processor 510, the internal memory 521, an external memory, the display 594, the camera 593, the wireless communication module 560, and the like.

A wireless communication function of the mobile phone 500 may be implemented through the antenna 1, the antenna 2, the mobile communication module 550, the wireless communication module 560, the modem processor, the baseband processor, and the like.

The antenna 1 and the antenna 2 are configured to transmit and receive an electromagnetic wave signal.

The mobile communication module 550 may provide a solution that is applied to the mobile phone 500 and that includes wireless communication such as 2G, 3G, 4G, and 5G. The mobile communication module 550 may include at least one filter, a switch, a power amplifier, a low noise amplifier (low noise amplifier, LNA), and the like.

The wireless communication module 560 may provide a solution that is applied to the mobile phone 500 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology.

In some embodiments, in the mobile phone 500, the antenna 1 and the mobile communication module 550 are coupled, and the antenna 2 and the wireless communication module 560 are coupled, so that the mobile phone 500 can communicate with a network and another device by using a wireless communication technology.

The mobile phone 500 implements a display function by using the GPU, the display 594, the application processor, and the like. The GPU is a microprocessor for image processing, and is connected to the display 594 and the application processor. The GPU is configured to: perform mathematical and geometric computation, and render an image. The processor 510 may include one or more GPUs that execute program instructions to generate or change display information.

The display 594 is configured to display an image, a video, or the like. The display 594 includes a display panel. In some embodiments, the mobile phone 500 may include one or N displays 594, where N is a positive integer greater than 1.

The mobile phone 500 may implement a photographing function through the ISP, the camera 593, the video codec, the GPU, the display 594, the application processor, and the like.

The ISP is configured to process data fed back by the camera 593. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 593.

The camera 593 is configured to capture a static image or a video. In some embodiments, the mobile phone 500 may include one or N cameras 593, where N is a positive integer greater than 1.

The DSP is configured to process a digital signal, and may process another digital signal (for example, an audio signal) in addition to a digital image signal.

The video codec is configured to compress or decompress a digital video. The mobile phone 500 may support one or more video codecs. In this way, the mobile phone 500 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and may further continuously perform self-learning.

The interface 520 for external memory may be configured to connect to an external storage card, for example, a micro SD card, to extend a storage capability of the mobile phone 500. The external storage card communicates with the processor 510 through the interface 520 for external memory, to implement a data storage function. For example, files such as music and videos are stored in the external storage card.

The internal memory 521 may be configured to store computer-executable program code, and the executable program code includes instructions. The processor 510 runs the instructions stored in the internal memory 521, to perform various function applications of the mobile phone 500 and data processing. The internal memory 521 may include a program storage area and a data storage area. The program storage area may store an operating system, an application required by at least one function (for example, a voice playing function or an image playing function), and the like. The data storage area may store data (for example, audio data or a phone book) created during use of the mobile phone 500, and the like. In addition, the internal memory 521 may include a high-speed random access memory, or may include a non-volatile memory, for example, at least one magnetic disk storage component, a flash memory, or a universal flash storage (universal flash storage, UFS).

The mobile phone 500 can implement an audio function such as music playing or recording by using the audio module 570, the speaker 570A, the receiver 570B, the microphone 570C, the headset jack 570D, the application processor, and the like.

The audio module 570 is configured to convert digital audio information into an analog audio signal for output, and is also configured to convert an analog audio input into a digital audio signal. The audio module 570 may be further configured to encode and decode audio signals. In some embodiments, the audio module 570 may be disposed in the processor 510, or some function modules of the audio module 570 are disposed in the processor 510.

The speaker 570A, also referred to as a "loudspeaker", is configured to convert an electrical audio signal into a sound signal. The mobile phone 500 may be used to listen to music or answer a call in a hands-free mode over the speaker 570A.

The receiver 570B, also referred to as an "earpiece", is configured to convert an audio electrical signal into a sound signal. When a call is answered or voice information is received by using the mobile phone 500, the receiver 570B may be put close to a human ear to listen to a voice.

The microphone 570C, also referred to as a "mike" or a "mic", is configured to convert a sound signal into an electrical signal. When making a call or sending a voice information, the user may generate a sound near the microphone 570C through the mouth of the user, to input a sound signal to the microphone 570C.

The headset jack 570D is configured to connect to a wired headset.

The button 590 includes a power button, a volume button, and the like. The button 590 may be a mechanical button, or may be a touch button. The mobile phone 500 may receive a button input, and generate a button signal input related to user setting and function control of the mobile phone 500.

The motor 591 may generate a vibration prompt. The motor 591 may be configured to provide an incoming call vibration prompt and a touch vibration feedback.

The indicator 592 may be an indicator light, and may be configured to indicate a charging status and a state of charge change, or may be configured to indicate a message, a missed call, a notification, and the like.

The SIM card interface 595 is used to connect to a SIM card. The SIM card may be inserted into the SIM card interface 595 or removed from the SIM card interface 595, to implement contact with or separation from the mobile phone 500. The mobile phone 500 may support one or N SIM card interfaces, where N is a positive integer greater than 1.

It may be understood that in embodiments of this application, the mobile phone 500 may perform some or all of steps in embodiments of this application. These steps or operations are merely examples. The mobile phone 500 may further perform other operations or variations of various operations. In addition, the steps may be performed in a sequence different from that presented in embodiments of this application, and not all the operations in embodiments of this application may be necessarily performed. Embodiments of this application may be separately implemented, or may be implemented in any combination. This is not limited in this application.

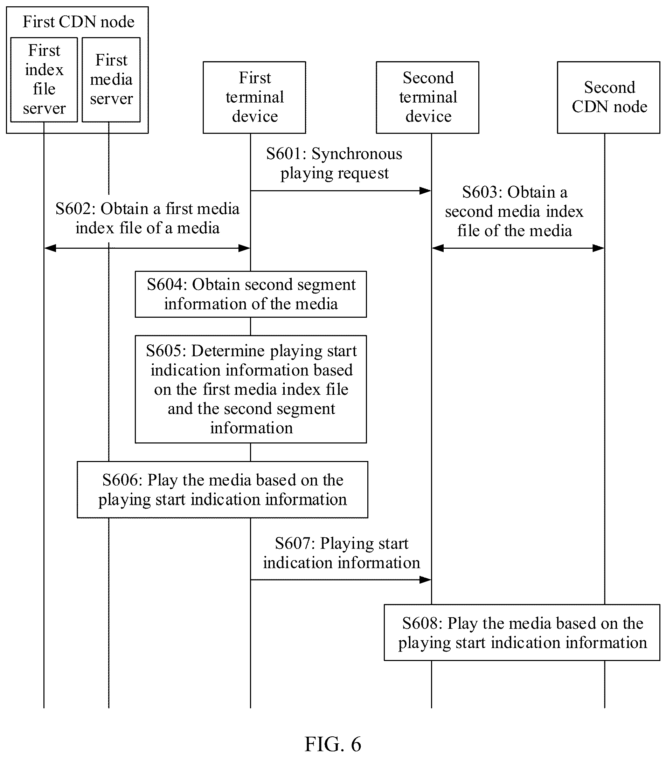

Based on the foregoing content, the following describes in detail a media synchronous playing method provided in an embodiment of this application. As shown in FIG. 6, an example in which a first terminal device initiates media synchronous playing to a second terminal device is used. The media synchronous playing method provided in this embodiment of this application includes the following steps.

S601: The first terminal device sends a synchronous playing request to a second terminal device, and correspondingly, the second terminal device receives the synchronous playing request, where the synchronous playing request is used to request the second terminal device to synchronously play a media with the first terminal device.

Optionally, the media to be synchronously played by the first terminal device and the second terminal device may be a video, or may be audio. That is, a user of the first terminal device and a user of the second terminal device may synchronously watch a video, for example, watch a movie, a variety show program, a ball game, or news, and the user of the first terminal device and the user of the second terminal device may further synchronously listen to audio, for example, listen to music or listen to a book.

In this embodiment of this application, when the first terminal device determines to initiate media synchronous playing to the second terminal device, the first terminal device selects the media to be synchronously played, and sends the synchronous playing request to the second terminal device. The synchronous playing request carries address information of the media to be synchronously watched or listened to. For example, the synchronous playing request includes a URL of an index file of the media. In an HLS streaming protocol, the URL of the index file of the media is a URL of a master playlist. In a DASH streaming protocol, the URL of the index file of the media is a URL of an MPD file.

S602: The first terminal device obtains a first media index file of the media from a first index file server.

It should be understood that the first index file server is located in a first CDN node accessed by the first terminal device, the first media index file is a media index file, of the media, stored in the first index file server, and the first media index file includes segment information (which may be referred to as first segment information) of the media, for example, includes a URL of a media segment that is at a first bit rate and that is stored in a sequence number. After the user selects an appropriate bit rate (for example, the first bit rate) on the first terminal device, the first index file server returns, to the first terminal device, the media index file corresponding to the first bit rate.

When a media streaming protocol is the HLS streaming protocol, the first media index file is a media playlist of the media; or when the media streaming protocol is the DASH streaming protocol, the first media index file is the MPD file of the media.

S603: The second terminal device obtains, from a second index file server, a second media index file of the media. The second index file server is located in a second CDN node accessed by the second terminal device.

S604: The first terminal device obtains second segment information of the media.

It should be understood that the second segment information is segment information, in the second index file of the media, obtained by the second terminal device from the second index file server, and the second media index file is a media index file, of the media, stored in the second index file server. Similarly, the second media index file includes a URL of a media segment at a second bit rate.

The first bit rate may be the same as or different from the second bit rate. Duration of a media segment stored in the first CDN node may be the same as or different from duration of a media segment stored in the second CDN node.

Optionally, the second segment information may be any one of the following A1 to A3:
A1. The second segment information is a second sequence number of a latest media segment in the second media index file.
A2. The second segment information is a second start timestamp of the latest media segment in the second media index file.
A3. The second segment information is segment information of a media segment indicated in the second media index file.

It should be understood that sequence numbers of media segments are sorted in ascending order, to indicate a playing order of the media segments. For example, a sequence number of a media segment played first is less than a sequence number of a media segment played later. A start timestamp of a media segment indicates a time point at which the media segment starts to be played in the entire media. For example, a playing start time point of the media is 00:00:00 (indicating 0 hours, 0 minutes, and 0 seconds), and a playing start time point of a media segment in the media is 00:00:10 (indicating 0 hours, 0 minutes, and 10 seconds).

In this embodiment of this application, a manner in which the first terminal device obtains the second segment information of the media includes the following Manner 1 or Manner 2.

Manner 1: The first terminal device receives the second segment information of the media from the second terminal device.

In this embodiment of this application, after the second terminal device receives the synchronous playing request sent by the first terminal device, the second terminal device requests, from the second index file server, the second media index file of the media. For example, after the user selects an appropriate bit rate (for example, the second bit rate) on the second terminal device, the second index file server returns, to the second terminal device, the media index file corresponding to the second bit rate, and the second terminal device sends the second segment information (for example, the sequence number of the latest segment, the start timestamp of the latest segment, or the second media index file) to the first terminal device based on the second media index file.

Manner 2: The first terminal device determines the second segment information based on the first media index file, location information of the first index file server or the first CDN node, and location information of the second index file server or the second CDN node.

In this embodiment of this application, the second terminal device does not need to send, to the first terminal device, the information (for example, a media index file) about the media in the second index file server, and the first terminal device determines the second segment information based on the first media index file obtained from the first index file server, and the location information, of the first index file server or the first CDN node accessed by the first terminal device, and the location information, of the second index file server or the second CDN node accessed by the second terminal device, that are obtained from a server side (for example, an IPTV platform). The location of the first CDN node is usually the same as the location of the first index server, and the location of the second CDN node is usually the same as the location of the second index file server. A process of determining the second segment information is described below by using the location information of the CDN nodes as an example.

If the first CDN node and the second CDN node are located in a same management domain (for example, located in a same province), and the duration of the media segment in the first CDN node is the same as duration of the media segment in the second CDN node, the first terminal device may determine the second segment information based on the first media index file, the location information of the first CDN node, and the location information of the second CDN node.

If the first CDN node and the second CDN node do not belong to a same management domain, and/or the duration of the media segment in the first CDN node is different from the duration of the media segment in the second CDN node, the first terminal device needs to determine the second segment information based on the first media index file, the location information of the first CDN node, the location information of the second CDN node, and more information (for example, duration of a media segment in each CDN and an estimated related parameter of a media segment).

In this embodiment of this application, the detailed process of determining the second segment information is described by using an example in which the first CDN node and the second CDN node are located in the same management domain, and the duration of the media segment in the first CDN node is the same as the duration of the media segment in the second CDN node.

In other words, Manner 2 specifically includes the following S1 and S2.

S1: The first terminal device determines a delay between the first CDN node and the second CDN node based on the location information of the first CDN node and the location information of the second CDN node.

The delay between the first CDN node and the second CDN node is used to determine a quantity of segments that differ between a latest segment in the first CDN node and a latest segment in the second CDN node.

With reference to the diagram of the architecture of the CDN shown in FIG. 3 and related descriptions of the CDN, it can be learned that there is a specific delay between CDN nodes at different layers in a same management domain, and there is no delay (or a delay may be ignored) between CDN nodes at a same layer in the same management domain. For example, a delay between the core node and the regional node may be 2 seconds, a delay between the regional node and the edge node may be 2 seconds, and a delay between the core node and the edge node may be 4 seconds.

S2: The first terminal device determines the second segment information based on the first media index file and the delay between the first CDN node and the second CDN node.

In this embodiment of this application, the quantity of segments that differ between the media segment in the first CDN node and the media segment in the second CDN node is calculated based on the delay between the first CDN node and the second CDN node, and the second segment information in the second media index file may be determined based on the media segment indicated by the first media index file and the quantity of segments that differ. Compared with that in Manner 1, in Manner 2, the second terminal device does not need to send the second segment information to the first terminal device, and the first terminal device determines the second segment information by the first terminal device. This can reduce overheads of the second terminal device.

For example, still refer to FIG. 3. It is assumed that duration of a media segment in the management domain is 2 seconds, the first CDN node is the core node, the second CDN node is the regional node, the first media index file includes segment information of five media segments, sequence numbers of the five media segments are sequentially 1, 2, 3, 4, and 5, and the delay between the first CDN node and the second CDN node is 2 seconds. In this case, there is one media segment that differs between the first CDN node and the second CDN node, that is, the first CDN node includes one more media segment than the second CDN node. Therefore, the second media index file may be determined based on the first media index file, and the second media index file includes four media segments whose sequence numbers are sequentially 1, 2, 3, and 4. If the sequence number of the latest segment in the first media index file is 5, the sequence number of the latest segment in the second media index file is 4; and if a time point corresponding to the start timestamp of the latest segment in the first media index file is 00:00:08 (indicating 0 hours, 0 minutes, and 8 seconds), a time point corresponding to the start timestamp of the latest segment in the second media index file is 00:00:06 (indicating 0 hours, 0 minutes, and 6 seconds).

It is also assumed that duration of a media segment in the management domain is 2 seconds, the first CDN node is the core node, the second CDN node is the edge node, the first media index file includes five media segments whose sequence numbers are sequentially 1, 2, 3, 4, and 5, and the delay between the first CDN node and the second CDN node is 4 seconds. In this case, there are two media segments that differ between the first CDN node and the second CDN node, that is, the first CDN node includes two more media segments than the second CDN node. Therefore, the second media index file may be determined based on the first media index file, and the second media index file includes three media segments whose sequence numbers are sequentially 1, 2, and 3. If the sequence number of the latest segment in the first media index file is 5, the sequence number of the latest segment in the second media index file is 3; and if a time point corresponding to the start timestamp of the latest segment in the first media index file is 00:00:08 (indicating 0 hours, 0 minutes, and 8 seconds), a time point corresponding to the start timestamp of the latest segment in the second media index file is 00:00:04 (indicating 0 hours, 0 minutes, and 4 seconds).

S605: The first terminal device determines playing start indication information based on the first media index file and the second segment information, where the playing start indication information indicates media content from which playing starts when the media is played.

It should be noted that the duration of the media segment in the first CDN node may be the same as or different from the duration of the media segment in the second CDN node.

In this embodiment of this application, when the duration of the media segment in the first CDN node is the same as the duration of the media segment in the second CDN node, the second segment information may be A1 or A2. In this case, determining the playing start indication information in S605 may include the following three implementations (Implementation 1 to Implementation 3).

Implementation 1: That the first terminal device determines the playing start indication information based on the first media index file and the second segment information specifically includes: The first terminal device determines a third sequence number based on a sequence number (referred to as a first sequence number below) of the latest segment in the first media index file and a sequence number (namely, the second sequence number) of the latest segment in the second media index file, where the third sequence number is a sequence number of a media segment in which the media content from which playing starts is located. It should be noted that the third sequence number is less than or equal to the first sequence number and less than or equal to the second sequence number.

In other words, the playing start indication information includes a sequence number of a media segment in which the media content from which playing starts is located, namely, the third sequence number.

Example 1: It is assumed that the first terminal device obtains the sequence number 6 of the latest segment in the first media index file, and the second terminal device obtains the sequence number 4 of the latest segment in the second media index file. If a media segment for security buffering does not need to be reserved, the first terminal device determines a media segment with a smallest sequence number as the media segment (that is, with the third sequence number) from which playing starts, that is, the media content from which playing starts is the media segment with the sequence number 4. In this case, the third sequence number is less than the first sequence number, and the third sequence number is equal to the second sequence number. If the media segment for security buffering is reserved, the third sequence number is determined based on a quantity of media segments reserved for security buffering and a smallest sequence number. For example, if two media segments need to be reserved for security buffering, starting from the smallest sequence number, playing starts from a third media segment from the end, that is, playing starts from a media segment with a sequence number 2. To be specific, the media content from which playing starts is the media segment with the sequence number 2.

Implementation 2: That the first terminal device determines the playing start indication information based on the first media index file and the second segment information specifically includes: The first terminal device determines a third start timestamp based on a start timestamp (referred to as a first start timestamp below) of the latest segment in the first media index file and a start timestamp (namely, the second start timestamp) of the latest segment in the second media index file, where the third start timestamp is a start timestamp of a media segment in which the media content from which playing starts is located. It should be noted that the third start timestamp is not later than the first start timestamp and is not later than the second start timestamp.

In other words, the playing start indication information includes a third start timestamp of a media segment in which the media content from which playing starts is located. It should be understood that a size of a timestamp indicates earlier time or later time. Generally, a smaller timestamp indicates earlier time, and a larger timestamp indicates later time. Therefore, when timestamps are compared, it may be described as a size relationship of the timestamps or an earlier- or-later relationship of the timestamps.

Example 2: It is assumed that the start timestamp of the latest segment in the first media index file indicates that a playing start time point of the latest segment is 00:00: 10 (indicating 0 hours, 0 minutes, and 10 seconds), the start timestamp of the latest segment in the second media index file indicates that a playing start time point of the latest segment is 00:00:06 (indicating 0 hours, 0 minutes, and 6 seconds), and duration of a segment is 2 seconds. If a media segment for security buffering does not need to be reserved, the first terminal device determines an earliest start timestamp (or a smallest start timestamp) of the media segment as the timestamp (namely, the third timestamp) of the media content from which playing starts, that is, the time point corresponding to the start timestamp of the media content from which playing starts is 00:00:06. In this case, the third start timestamp is less than the first timestamp, and the third timestamp is equal to the second timestamp. If the media segment for security buffering needs to be reserved, the third start timestamp is determined based on duration of the media content reserved for security buffering and the smallest start timestamp. For example, if media content of 4 seconds needs to be reserved for security buffering, playing starts from 4 seconds backward from end time of the media segment corresponding to the smallest start timestamp (00:00:06 is the start time corresponding to the smallest start timestamp, and the end time of the media segment corresponding to the start timestamp is 00:00:08), that is, playing starts from a timestamp corresponding to a time point 00:00:04. To be specific, the start timestamp of the media content from which playing starts is the timestamp corresponding to 00:00:04. In this case, the third start timestamp is less than the first timestamp and less than the second timestamp.

Implementation 3: That the first terminal device determines the playing start indication information based on the first media index file and the second segment information includes: The first terminal device determines, based on a start timestamp of the media, a start timestamp (namely, a first start timestamp) of the latest segment in the first media index file, and/or a start timestamp (namely, the second start timestamp) of the latest segment in the second media index file, a first offset of a start timestamp of the media content from which playing starts relative to the start timestamp of the media. It should be noted that the first offset is less than or equal to an offset of the first start timestamp relative to the start timestamp of the media, and is less than or equal to an offset of the second start timestamp relative to the start timestamp of the media.

In other words, the playing start indication information includes the first offset of the start timestamp of the media content from which playing starts relative to the start timestamp of the media, and the start timestamp of the media content from which playing starts when the media is played synchronously may be determined based on the first offset and the start timestamp of the media.

Example 3: Similar to the example in the foregoing Implementation 2, it is assumed that a start time point corresponding to the start timestamp of the media is 00:00:00 (indicating 0 hours, 0 minutes, and 0 seconds), the start timestamp of the latest segment in the first media index file indicates that a playing start time point of the latest segment is 00:00: 10 (indicating 0 hours, 0 minutes, and 10 seconds), the start timestamp of the latest segment in the second media index file indicates that a playing start time point of the latest segment is 00:00:06 (indicating 0 hours, 0 minutes, and 6 seconds), and duration of a segment is 2 seconds. If a media segment for security buffering does not need to be reserved, the time point corresponding to the start timestamp of the determined media content from which playing starts is 00:00:06, and the offset of the start timestamp of the media content from which playing starts relative to the start timestamp of the entire media is 6 seconds, that is, the first offset is 6 seconds. In this case, the first offset is less than the offset (10 seconds) of the first start timestamp relative to the start timestamp of the media, and the first offset is equal to the offset (6 seconds) of the second start timestamp relative to the start timestamp of the media. If the media segment for security buffering needs to be reserved (for example, media content of 4 seconds is reserved for security buffering), the start timestamp of the media content from which playing starts is determined to be the start timestamp corresponding to 00:00:04, and the offset of the start timestamp of the media content from which playing starts relative to the start timestamp of the entire media is 4 seconds, that is, the first offset is 4 seconds. In this case, the first offset is less than the offset (10 seconds) of the first start timestamp relative to the start timestamp of the media, and the first offset is less than the offset (6 seconds) of the second start timestamp relative to the start timestamp of the media.

In this embodiment of this application, when the duration of the media segment in the first CDN node is different from the duration of the media segment in the second CDN node, the second segment information may be A3 (The second segment information is the segment information of the media segment indicated in the second media index file). In this case, determining the playing start indication information in S605 may include the following two implementations (Implementation 4 and Implementation 5).

Implementation 4: The playing start indication information determined by the first terminal device includes first playing start indication information and second playing start indication information. The first playing start indication information indicates, to the first terminal device, the media content from which playing starts when the media is played, and the second playing start indication information indicates, to the second terminal device, the media content from which playing starts when the media is played.

Optionally, that the first terminal device determines the first playing start indication information based on the first media index file and the second segment information specifically includes: The first terminal device determines, based on a start timestamp of the latest segment in the first media index file and a start timestamp of the latest segment in the second media index file, a start timestamp of video content from which playing starts, and then determines, based on the start timestamp of the media content, a media segment (referred to as a first target media segment, which is one of a media segment indicated by the first media index file) in which the media content is located and a second offset of start time of the media content relative to start time of the first target media segment.

In other words, the first playing start indication information includes a sequence number of the first target media segment in which the media content from which playing starts is located and the second offset of the start time of the media content from which playing starts relative to the start time of the first target media segment.

Optionally, that the first terminal device determines the second playing start indication information based on the first media index file and the second segment information specifically includes: The first terminal device determines, based on a start timestamp of the latest segment in the first media index file and a start timestamp of the latest segment in the second media index file, a start timestamp of video content from which playing starts, and then determines, based on the start timestamp of the media content, a media segment (referred to as a second target media segment, which is one of the media segment indicated by the second media index file) in which the media content is located and a third offset of start time of the media content relative to start time of the second target media segment.

In other words, the second playing start indication information includes a sequence number of the second target media segment in which the media content from which playing starts is located and the third offset of the start time of the media content from which playing starts relative to the start time of the second target media segment.

Example 4: It is assumed that duration of a media segment in the first CDN node is 4 seconds, duration of a media segment in the second CDN node is 3 seconds, the first media index file includes five media segments, the time point corresponding to the start timestamp of the latest segment is 00:00: 16, the second media index file includes six media segments, and the time point corresponding to the start timestamp of the latest segment is 00:00: 15. If the first terminal device determines that the time point corresponding to the start timestamp of the video content from which playing starts is 00:00: 14, the first target media segment in which the video content from which playing starts is located in the first playing start indication information is a media segment with a sequence number 4 (start time of the media segment numbered 4 is 00:00: 12) in the first media index file, and the second offset of the media content relative to the start time of the media segment with the sequence number 4 is 2 seconds. The second target media segment in which the video content from which playing starts is located in the second playing start indication information is a media segment with a sequence number 5 (start time of the media segment numbered 5 is 00:00: 12) in the second media index file, and the third offset of the media content relative to the start time of the media segment with the sequence number 5 is 2 seconds.

Implementation 5: That the first terminal device determines the second playing start indication information based on the first media index file and the second segment information specifically includes: The first terminal device determines, based on a start timestamp of the latest segment in the first media index file and a start timestamp of the latest segment in the second media index file, a start timestamp of the video content from which playing starts, and then determines a fourth offset of the start timestamp relative to the start time of the entire media. It should be noted that the fourth offset is less than or equal to the offset of the start timestamp of the first target media segment relative to the start timestamp of the media, and is less than or equal to the offset of the start timestamp of the second target media segment relative to the start timestamp of the media.

In other words, the playing start indication information includes the fourth offset of the start time of the media content from which playing starts relative to the start time of the media.

Example 5: Similarly, it is assumed that duration of a media segment in the first CDN node is 4 seconds, duration of a media segment in the second CDN node is 3 seconds, the first media index file includes five media segments, a time point corresponding to the start timestamp of the latest segment is 00:00:16, the second media index file includes six media segments, a time point corresponding to the start timestamp of the latest segment is 00:00:15, and playing start time of the media is 00:00:00. If the first terminal device determines that the time point corresponding to the start timestamp of the video content from which playing starts is 00:00:14, the fourth offset is 14 seconds.

It can be learned from the descriptions of the playing start indication information in the foregoing embodiment that the playing start indication information has diversified content. For example, the playing start indication information may be the sequence number of the media segment, the start timestamp of the media segment, or the related offset. The user can flexibly perform selection based on an actual requirement.

In an implementation, the playing start indication information further includes playing start time information, and the playing start time information indicates system time at which the media content starts to be played. It should be noted that system time of the first terminal device and system time of the second terminal device need to be synchronized. For example, the system time of the first terminal device and the system time of the second terminal device are synchronized to universal time or coordinated universal time (universal time coordinated, UTC) by using a network time protocol (network time protocol, NTP).

The playing start time information may be absolute time or relative time. The relative time may be an offset relative to start time of the media segment. For example, if it is specified that the start time of the media segment is 21:09:20 (21:09:20) and the offset is 2 seconds, playing time of the media content from which playing starts is 21:09:22.

In an implementation, the system time at which the media content starts to be played is configured on the first terminal device and the second terminal device, or a time offset is configured on the IPTV platform, where the offset is the offset relative to the configured start time of the media segment.

In this embodiment of this application, the system time for starting the media content is configured, so that the terminal device plays the media based on the configured system time. This can further ensure synchronous playing start in a case in which the media is played on a plurality of terminals.

S606: The first terminal device plays the media based on the playing start indication information.

With reference to the content of the playing start indication information in S605, correspondingly, that the first terminal device plays the media based on the playing start indication information includes the following several cases.

Case 1: When the duration of the media segment in the first CDN node is the same as the duration of the media segment in the second CDN node, the media is played in either of the following Manners B1 and B2.

B1. When the playing start indication information includes the third sequence number of the media segment in which the media content from which playing start is located, that the first terminal device plays the media based on the playing start indication information specifically includes: The first terminal device starts, based on a sequence number of a media segment downloaded by a first media server (which may also be described as the first CDN node) corresponding to the first index file server, playing from the media segment with the third sequence number.

For Example 1 in Implementation 1, if the determined media content from which playing starts is with the sequence number 3 (the third sequence number), the first terminal device starts playing from the media segment with the sequence number 3 in the media segment downloaded by the first CDN node.

B2. When the playing start indication information includes the third start timestamp of the media segment in which the media content from which playing starts is located or the first offset, that the first terminal device plays the media based on the playing start indication information specifically includes: The first terminal device determines the fourth sequence number based on the third start timestamp or the first offset, and then starts playing from the media segment with the fourth sequence number based on the sequence number of the media segment downloaded by the first CDN node.

For Example 2 in Implementation 2, if the start timestamp of the determined media content from which playing starts is the timestamp corresponding to 00:00:04, it may be determined that the sequence number (the fourth sequence number) of the media segment in which the media content from which playing starts is located is 3. In this case, the first terminal device starts playing from the media segment with the sequence number 3 in the media segment downloaded by the first CDN node.

For Example 3 in Implementation 3, if the offset (the first offset) of the start timestamp of the determined media content from which playing starts relative to the start timestamp of the entire media is 4 seconds, it may be determined that the sequence number (the fourth sequence number) of the media segment in which the media content from which playing starts is located is 3. In this case, the first terminal device starts playing from the media segment with the sequence number 3 in the media segment downloaded by the first CDN node.

Case 2: When the duration of the media segment in the first CDN node is different from the duration of the media segment in the second CDN node, the media is played in either of the following Manners C1 and C2.

C1. When the first playing start indication information corresponding to the first terminal device includes the sequence number of the first target media segment in which the media content from which playing starts and the second offset of the start time of the media content from which playing starts relative to the start time of the first target media segment, that the first terminal device plays the media based on the playing start indication information specifically includes: The first terminal device downloads the first target media segment from the first CDN node, and starts playing from first media content in the first target media segment, where the first media content is media content corresponding to the fourth timestamp indicated by the second offset.

For Example 4 in Implementation 4, if the first target media segment in which the determined video content from which playing starts is located is the media segment with the sequence number 4 in the first media index file (the start time of the media segment numbered 4 is 00:00:12), the second offset of the media content relative to the start time of the media segment with the sequence number 4 is 2 seconds, and the time point corresponding to the fourth timestamp indicated by the second offset is 00:00:14, the first terminal device starts playing from the media content at the time point 00:00:14 in the media segment with the sequence number 4 in the media segment downloaded from the first CDN node.

C2. When the playing start indication information includes the fourth offset of the start time of the media content from which playing starts relative to the start time of the media, that the first terminal device plays the media based on the playing start indication information specifically includes: The first terminal device determines the fifth sequence number based on the fourth offset, and starts playing from second media content in a media segment with the fifth sequence number based on the sequence number of the media segment downloaded from the first CDN node, where the second media content is media content corresponding to the fifth timestamp indicated by the fourth offset.

For Example 5 in Implementation 5, if the determined fourth offset is 14 seconds, and the time point corresponding to the fifth timestamp indicated by the fourth offset is 00:00:14, the first terminal device determines that the sequence number (the fifth sequence number) of the media segment corresponding to the fourth offset is 4, and then starts playing from media content at the time point 00:00:14 in the media segment with the sequence number 4 in the media segment downloaded from the first CDN node.

S607: The first terminal device sends the playing start indication information to the second terminal device, and correspondingly, the second terminal device receives the playing start indication information from the first terminal device.

S608: The second terminal device plays the media based on the playing start indication information.

Similar to S606, with reference to the content of the playing start indication information in S605, correspondingly, that the second terminal device plays the media based on the playing start indication information includes the following several cases.

Case 1: When the duration of the media segment in the first CDN node is the same as the duration of the media segment in the second CDN node, the media is played in any one of the following Manners D1 to D3.

D1. When the playing start indication information includes the third sequence number of the media segment in which the media content from which playing start is located, that the second terminal device plays the media based on the playing start indication information specifically includes: The second terminal device starts, based on a sequence number of a media segment downloaded by a second media server (which may also be described as the second CDN node) corresponding to the second index file server in the second CDN node, playing from the media segment with the third sequence number.

For Example 1 in Implementation 1, if the determined media content from which playing starts is with the sequence number 3 (the third sequence number), the second terminal device starts playing from the media segment with the sequence number 3 in the media segment downloaded by the second CDN node.

The playing start indication information indicates the sequence number of the media segment. In this way, the first terminal device can directly determine, based on the sequence number, the media segment from which playing starts, and can quickly and efficiently obtain the media segment.

D2. When the playing start indication information includes the third start timestamp of the media segment in which the media content from which playing starts is located or the first offset, that the second terminal device plays the media based on the playing start indication information specifically includes: The second terminal device determines the fourth sequence number based on the third start timestamp or the first offset, and then starts playing from the media segment with the fourth sequence number based on the sequence number of the media segment downloaded by the second CDN node.

For Example 2 in Implementation 2, if the start timestamp of the determined media content from which playing starts is the timestamp corresponding to 00:00:04, it may be determined that the sequence number (the fourth sequence number) of the media segment in which the media content from which playing starts is located is 3. In this case, the second terminal device starts playing from the media segment with the sequence number 3 in the media segment downloaded by the second CDN node.

For Example 3 in Implementation 3, if the offset (the first offset) of the start timestamp of the determined media content from which playing starts relative to the start timestamp of the entire media is 4 seconds, it may be determined that the sequence number (the fourth sequence number) of the media segment in which the media content from which playing starts is located is 3. In this case, the second terminal device starts playing from the media segment with the sequence number 3 in the media segment downloaded by the second CDN node.

Case 2: When the duration of the media segment in the first CDN node is different from the duration of the media segment in the second CDN node, the media is played in either of the following Manners E1 and E2.

E1. When the second playing start indication information corresponding to the second terminal device includes the sequence number of the second target media segment in which the media content from which playing starts and the third offset of the start time of the media content from which playing starts relative to the start time of the second target media segment, that the second terminal device plays the media based on the playing start indication information specifically includes: The second terminal device downloads the second target media segment from the second CDN node, and starts playing from third media content in the second target media segment, where the third media content is media content corresponding to the sixth timestamp indicated by the third offset.

For Example 4 in Implementation 4, if the second target media segment in which the determined video content from which playing starts is located is the media segment with the sequence number 5 in the second media index file (the start time of the media segment numbered 5 is 00:00:12), the third offset of the media content relative to the start time of the media segment with the sequence number 5 is 2 seconds, and the time point corresponding to the sixth timestamp indicated by the third offset is 00:00: 14, the second terminal device starts playing from the media content at the time point 00:00:14 in the media segment with the sequence number 5 in the media segment downloaded from the second CDN node.

E2. When the playing start indication information includes the fourth offset of the start time of the media content from which playing starts relative to the start time of the media, that the second terminal device plays the media based on the playing start indication information specifically includes: The second terminal device determines the sixth sequence number based on the fourth offset, and starts playing from fourth media content in a media segment with the sixth sequence number based on the sequence number of the media segment downloaded from the second CDN, where the fourth media content is media content corresponding to the seventh timestamp indicated by the fourth offset.

For Example 5 in Implementation 5, if the determined fourth offset is 14 seconds, and the time point corresponding to the seventh timestamp indicated by the fourth offset is 00:00:14, the first terminal device determines that the sequence number (the sixth sequence number) of the media segment corresponding to the fourth offset is 5, and then starts playing from media content at the time point 00:00:14 in the media segment with the sequence number 5 in the media segment downloaded from the second CDN node.

Correspondingly, optionally, when the playing start indication information further includes the playing start time information, that the first terminal device and the second terminal device play the media based on the playing start indication information specifically includes: When a system time reaches the time indicated by the playing start time information, the first terminal device and the second terminal device start to play a downloaded media segment.

For example, if the system time indicated by the playing start time information is 21:09:22, and the time point corresponding to the timestamp of the media content from which the first terminal device and the second terminal device starts playing is 00:00:14, the first terminal device and the second terminal device both start to play the media at 00:00:14 when the system time reaches 21:09:22.

In conclusion, in the media synchronous playing method provided in this embodiment of this application, the first terminal device participating in media synchronous playing obtains the first media index file of the media from the first index file server, and obtains the second segment information, in the second media index file of the media, obtained by the second terminal device from the second index file server. Then, the first terminal device determines the playing start indication information based on the first media index file and the second segment information, where the playing start indication information indicates the media content from which playing starts when the media is played. Further, the first terminal device sends the playing start indication information to the second terminal device, so that the second terminal device starts to play the media based on the playing start indication information. In the method, the first terminal device may indicate, to the second terminal device by using the playing start indication information, the media content from which playing starts. This can ensure that when the first terminal device and the second terminal device synchronously play the media, the media content from which playing starts is the same, ensure synchronous playing start on the plurality of terminals, and improve user experience of synchronously watching or listening to the media.

In the foregoing media synchronous playing method, a communication connection for interaction between the first terminal device and the second terminal device may be a real-time communication connection established when the first terminal device initiates RTC real-time communication to the second terminal device while initiating media synchronous playing, or may be another communication connection that has been established between the first terminal device and the second terminal device before the first terminal device initiates media synchronous playing. This is not limited in embodiments of this application.

It should be noted that, if the first terminal device initiates the RTC real-time communication to the second terminal device while initiating media synchronous playing, the first terminal device and the second terminal device may also implement a chat function based on real-time communication when synchronously playing the media, for example, perform a video call, an audio call, or a text chat.

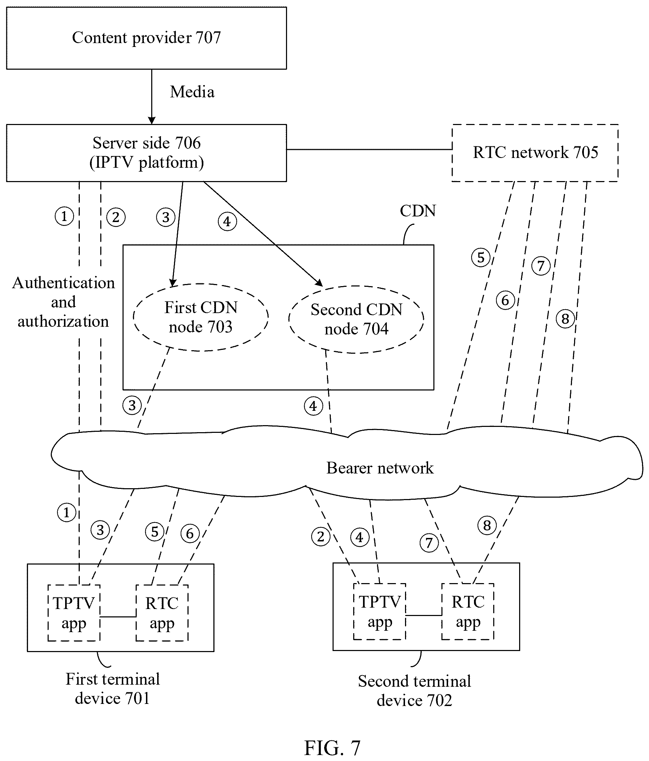

An architecture of a media synchronous playing system is described below by using an example in which the first terminal device initiates the RTC real-time communication to the second terminal device while initiating media synchronous playing. Refer to FIG. 7. The system includes a first terminal device 701, a second terminal device 702, a first CDN node 703 (including a first index file server and a first media server), a second CDN node 704 (including a second index file server and a second media server), an RTC network 705, a server side 706, and a content provider 707.

The first CDN node 703 is a CDN node accessed by the first terminal device 701, and the second CDN node 704 is a CDN node accessed by the second terminal device 702.

The RTC network 705 is a network used by the first terminal device 701 and the second terminal device 702 for real-time communication, and the first terminal device 701 and the second terminal device 702 may establish a control plane, a media plane, and a data channel based on the RTC network 705. The first terminal device 701 and the second terminal device 702 transmit a message (for example, a synchronous playing request or playing start indication information) through the control plane or the data plane, and may transmit a video stream (for example, a video stream of a video call) or an audio stream (for example, a voice stream of a voice call) through the media plane.

For example, the RTC network 705 may be a web RTC network or an IP-multimedia subsystem (the IP-multimedia subsystem, IMS).

It should be understood that the first terminal device 701 and the second terminal device 702 are terminal devices running real-time communication application (for example, an RTC app). When the server side 706 is an IPTV platform, the first terminal device 701 and the second terminal device 702 also run an IPTV application. Optionally, in embodiments of this application, the IPTV app and the RTC app run by the first terminal device 701 and the second terminal device 702 may be independent applications, or may be an application that integrates functions of the two applications. A specific implementation form is not limited in embodiments of this application.

For descriptions of the content provider 707, the server side 706, and other content, refer to the descriptions of the system architecture shown in FIG. 4 in the foregoing embodiment.

The following describes connection relationships between devices and networks in FIG. 7.

A line marked with ① indicates a message stream between the server side 706 and the first terminal device 701.

A line marked with ② indicates a message stream between the server side 706 and the second terminal device 702.

A line marked with ③ indicates a media stream between the server side 706, the first CDN node 703, and the first terminal device 701.

A line marked with ④ indicates a media stream between the server side 706, the second CDN node 704, and the second terminal device 702.

A line marked with ⑤ indicates a control-plane signal stream between the RTC network 705 and the first terminal device 701.

A line marked with ⑥ indicates a media plane or data channel between the RTC network 705 and the first terminal device 701.

A line marked with ⑦ indicates a control-plane signal stream between the RTC network 705 and the second terminal device 702.

A line marked with ⑧ indicates a media plane or data channel between the RTC network 705 and the second terminal device 702.

Similar to the architecture shown in FIG. 4, before performing media synchronous playing, the first terminal device 701 needs to interact with the server side 706 (for example, the IPTV platform) based on the message stream marked with ① to perform authentication and authorization, and the second terminal device 702 needs to interact with the server side 706 (for example, the IPTV platform) based on the message stream marked with ② to perform authentication and authorization.

Procedures of several detailed media synchronous playing methods in the HLS streaming protocol and the DASH streaming protocol are separately described in the following embodiments by using an example in which the server side is the IPTV platform. It should be understood that the IPTV platform includes a service management platform and a service capability platform. The service management platform is configured to perform access and management on the terminal device, and the service capability platform is configured to authenticate, authorize, and process the media content provided by the content provider, and send processed media content to the CDN network.

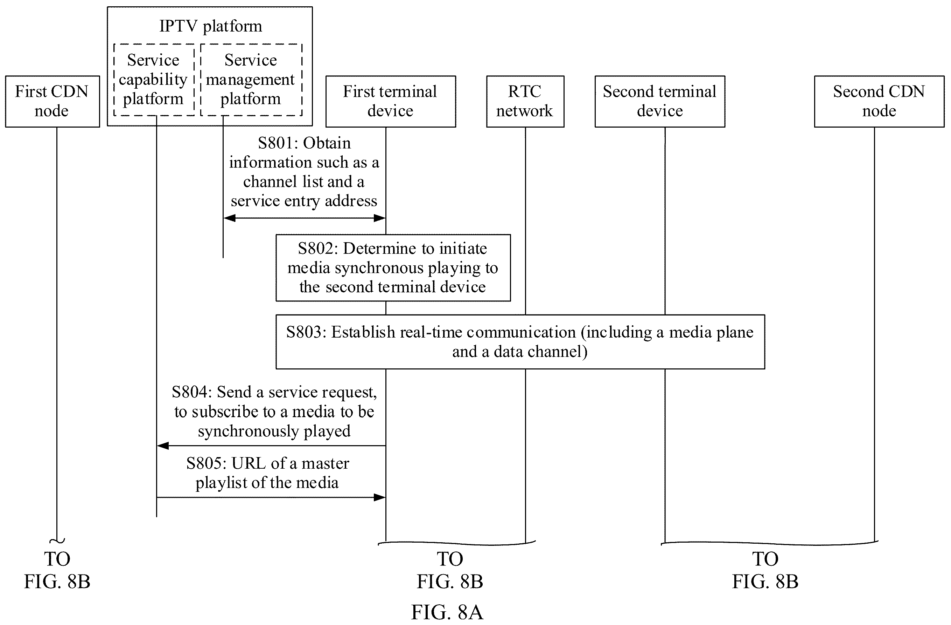

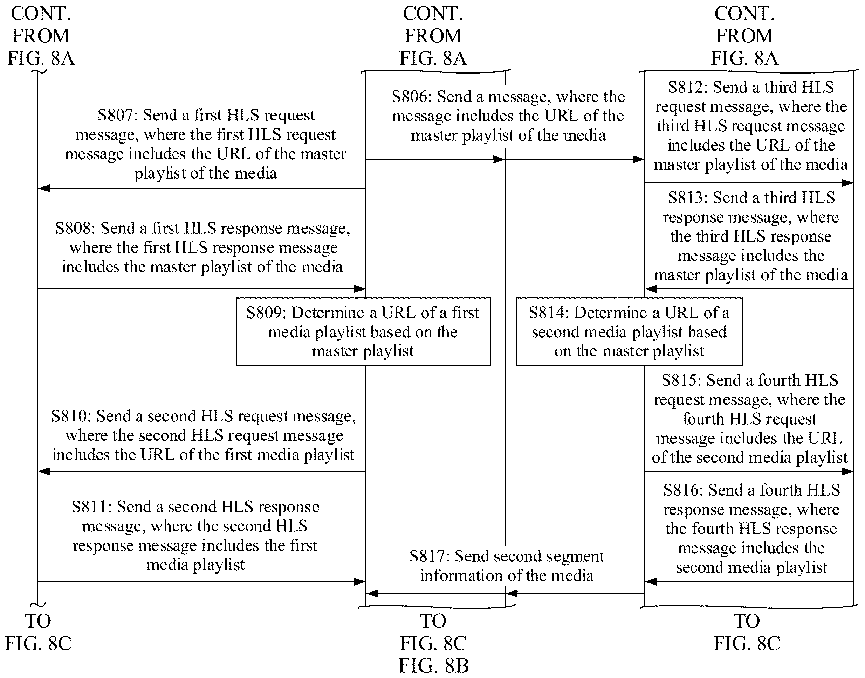

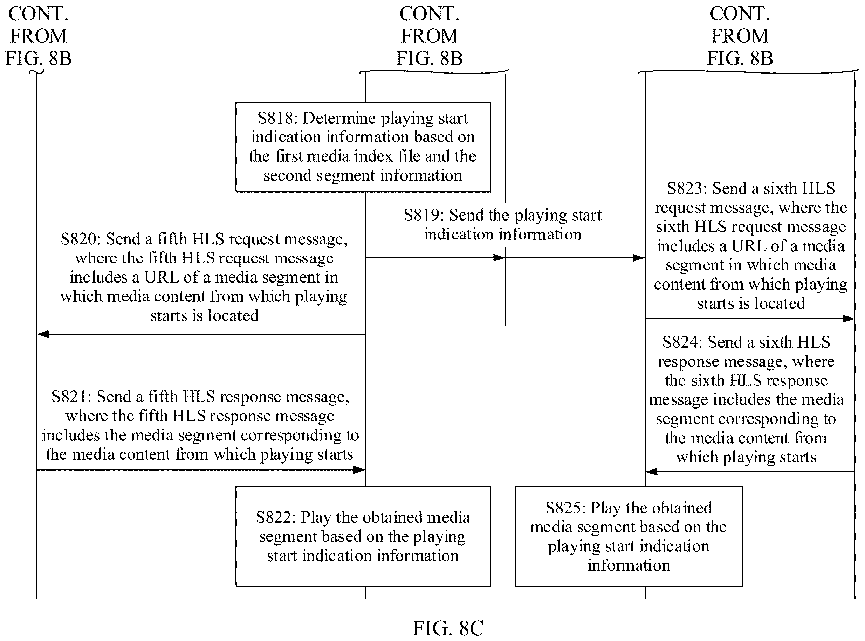

As shown in FIG. 8A to FIG. 8C, when the media streaming protocol is the HLS streaming protocol, a media synchronous playing method provided in an embodiment of this application includes the following steps.

S801: A first terminal device obtains information such as a channel list and a service entry address from a service management platform of an IPTV platform.

It should be understood that the first terminal device obtains the information such as the channel list and the service entry address, and the first terminal device displays an EPG browsing interface based on the information such as the channel list and the service entry address. Further, a user may select a favorite media program from the EPG browsing interface based on a watching requirement. S801 is implemented by using the message stream marked with ① in FIG. 7.

S802: The first terminal device determines to initiate media synchronous playing to a second terminal device.

In an implementation, the user may select, in the EPG browsing interface displayed by the first terminal device, a specified control used to trigger media synchronous playing, for example, a "synchronous watching" control. The first terminal device displays a friend list in response to the operation of selecting the "synchronous watching" control by the user. Further, the user may select a friend (the friend corresponds to the second terminal device) from the friend list as a requested watching object, to trigger a subsequent synchronous watching procedure.

S803: The first terminal device establishes real-time communication (including a media plane and a data channel) with the second terminal device over an RTC network.

In this embodiment of this application, the first terminal device initiates a real-time communication request to the second terminal device over the RTC network. The real-time communication request is used to request to establish an RTC connection to the second terminal device. Optionally, real-time communication may be a video session, a voice session, or the like. The video session may be a video call or a video conference. The video call is a session in which two parties participate, and the video conference is a session in which a plurality of parties participate (for example, the first terminal device may initiate synchronous watching to the second terminal device and a third terminal device). S803 is implemented by using the message streams marked with ⑤ and ⑦ in FIG. 7. That is, the session request is sent between the first terminal device, the RTC network, and the second terminal device by using the control plane signal streams, to establish real-time communication.

Establishing real-time communication between the first terminal device and the second terminal device includes establishing the media plane (or referred to as a media streaming channel, including a video stream streaming channel and an audio stream streaming channel) and the data channel. The first terminal device may perform the video or voice call with the second terminal device through the media plane, and send an EPG to the second terminal device through the media plane or the data channel, so that the EPG browsing interface can also be displayed on the second terminal device.

S804: The first terminal device sends a service request to a service capability platform of the IPTV platform, where the service request is used to subscribe to a media to be synchronously played.

S805: The service capability platform of the IPTV platform sends a URL of a master playlist of the media to the first terminal device.

In this embodiment of this application, the user chooses to initiate media synchronous playing to the second terminal device, and the user may select a media service (a live broadcast service or another service) on the EPG browsing interface, to perform synchronous playing with the second terminal device. In response to the operation of selecting the media by the user, the first terminal device sends the service request to the service capability platform of the IPTV platform, and then the service capability platform returns the URL of the master playlist of the media. The master playlist includes URLs of a plurality of media playlists. S805 is implemented by using the message stream marked with ① in FIG. 7.

It should be noted that a sequence of performing S803, and S804 and S805 is not limited in this embodiment of this application. S803 may be performed before S804 and S805, or S804 and S805 may be performed before S803, that is, the first terminal device may establish real-time communication with the first terminal device, and then select the media to be synchronously played, or the first terminal device may select the media to be synchronously played, and then establish real-time communication with the second terminal device, or S803, and S804 and S805 may be performed synchronously.

S806: The first terminal device sends a message to the second terminal device, where the message includes the URL of the master playlist of the media.

Optionally, the first terminal device may send the URL of the master playlist to the second terminal device by using control plane information of the RTC network, for example, send the URL of the master playlist to the RTC network by using the message stream marked with ⑤ in FIG. 7, and the RTC network sends the URL of the master playlist to the second terminal device by using the message stream marked with ⑦ in FIG. 7. Alternatively, the first terminal device may send the URL of the master playlist to the second terminal device through the established data channel. For example, the first terminal device sends the URL of the master playlist to the RTC network by using the message stream marked with ⑥ in FIG. 7, and the RTC network sends the URL of the master playlist to the second terminal device by using the message stream marked with ⑧ in FIG. 7.

S807: The first terminal device sends a first HLS request message to a first CDN node, where the first HLS request message includes the URL of the master playlist of the media.

The first HLS request message is used to request to obtain a master playlist stored in the first CDN node.

S808: The first CDN node sends a first HLS response message to the first terminal device, where the first HLS response message includes the master playlist of the media.

S809: The first terminal device determines a URL of a first media playlist based on the master playlist.

The first terminal device selects an appropriate bit rate based on a current network status (for example, a bandwidth size) of the first terminal device and a capability of the first terminal device, and determines, from the first playlist, a URL of a media playlist corresponding to the bit rate (referred to as the URL of the first media playlist).

S810: The first terminal device sends a second HLS request message to the first CDN node, where the second HLS request message includes the URL of the first media playlist.

The second HLS request message is used to request to obtain a first media playlist stored in the first CDN node.

S811: The first CDN node sends a second HLS response message to the first terminal device, where the second HLS response message includes the first media playlist.

S807 to S811 are implemented by using the message stream marked with ③ in FIG. 7. In S807 and S808 and S810 and S811, a process in which the first terminal device interacts with the first CDN node to obtain the first media playlist is specifically that the first terminal device interacts with a first index file server in the first CDN node, to obtain the first media playlist from the first index file server.

S812: The second terminal device sends a third HLS request message to a second CDN node, where the third HLS request message includes the URL of the master playlist of the media.

The third HLS request message is used to request to obtain a master playlist stored in the second CDN node.

S813: The second CDN node sends a third HLS response message to the second terminal device, where the third HLS response message includes the master playlist of the media.

S814: The second terminal device determines a URL of a second media playlist based on the master playlist.

The second terminal device selects an appropriate bit rate based on a current network status (for example, a bandwidth size) of the second terminal device and a capability of the second terminal device, and determines, from the second media playlist, a URL of a media playlist corresponding to the bit rate (referred to as the URL of the second media playlist).

S815: The second terminal device sends a fourth HLS request message to the second CDN node, where the fourth HLS request message includes the URL of the second media playlist.

The fourth HLS request message is used to request to obtain a second media playlist stored in the second CDN node.

S816: The second CDN node sends a fourth HLS response message to the second terminal device, where the fourth HLS response message includes the second media playlist.

S812 to S816 are implemented by using the message stream marked with ④ in FIG. 7. In S812 and S813 and S815 and S816, a process in which the second terminal device interacts with the second CDN node to obtain the second media playlist is specifically that the second terminal device interacts with a second index file server in the second CDN node, to obtain the second media playlist from the second index file server.

S817: The second terminal device sends second segment information of the media to the first terminal device, and correspondingly, the first terminal device receives the second segment information from the second terminal device.

It can be learned from the content of the foregoing embodiment that the second segment information may be a second sequence number of a latest media segment in the second media index file, or a second start timestamp of the latest media segment in the second media index file, or the second media index file. S817 may be implemented by using the message streams marked with ⑦ and ⑤ in FIG. 7, or by using the message streams marked with ⑧ and ⑥ in FIG. 7.

S818: The first terminal device determines playing start indication information based on the first media index file and the second segment information.

The playing start indication information indicates media content from which playing starts when the media is played.

In an implementation, when duration of a media segment in the first CDN node is the same as duration of a media segment in the second CDN node, the playing start indication information may be any one of a third sequence number of a media segment in which the media content from which playing starts is located, a third start timestamp of the media segment in which the media content from which playing starts is located, or a first offset of a start timestamp of the media content from which playing starts relative to a start timestamp of the media.

In another implementation, when duration of a media segment in the first CDN node is different from duration of a media segment in the second CDN node, the playing start indication information may be a sequence number of a first target media segment in which the media content from which playing starts is located, and a second offset of start time of the media content from which playing starts relative to start time of the first target media segment, or a fourth offset of the start time of the media content from which playing starts relative to start time of the media.

For detailed descriptions of S818, refer to the descriptions of S605 in the foregoing embodiment. Details are not described herein again.

S819: The first terminal device sends the playing start indication information to the second terminal device, and correspondingly, the second terminal device receives the playing start indication information from the first terminal device.

S819 may be implemented by using the message streams marked with ⑤ and ⑦ in FIG. 7, or by using the message streams marked with ⑥ and ⑧ in FIG. 7.

S820: The first terminal device sends a fifth HLS request message to the first CDN node, where the fifth HLS request message includes a URL of a media segment in which the media content from which playing starts is located.

The fifth HLS request message is used to request to obtain a media segment corresponding to the media content from which playing starts. The first terminal device obtains, from the first media playlist based on the playing start indication information, the URL of the media segment in which the media content from which playing starts is located.

S821: The first CDN node sends a fifth HLS response message to the first terminal device, where the fifth HLS response message includes the media segment corresponding to the media content from which playing starts.

S820 and S821 are implemented by using the message stream marked with ③ in FIG. 7. In S820 and S821, a process in which the first terminal device interacts with the first CDN node to obtain the media segment is specifically that the first terminal device interacts with a first media server corresponding to the first index file server in the first CDN node, to obtain the media segment from the first media server.

S822: The first terminal device plays the obtained media segment based on the playing start indication information.

S823: The second terminal device sends a sixth HLS request message to the second CDN node, where the sixth HLS request message includes a URL of the media segment in which the media content from which playing starts is located.

The sixth HLS request message is used to request to obtain a media segment corresponding to the media content from which playing starts. The second terminal device obtains, from the second media playlist based on the playing start indication information, a URL of the media segment in which the media content from which playing starts is located.

S824: The second CDN node sends a sixth HLS response message to the second terminal device, where the sixth HLS response message includes the media segment corresponding to the media content from which playing starts.

S823 and S824 are implemented by using the message stream marked with ④ in FIG. 7. In S823 and S824, a process in which the second terminal device interacts with the second CDN node to obtain the media segment is specifically that the second terminal device interacts with a second media server corresponding to the second index file server in the second CDN node, to obtain the media segment from the second media server.

S825: The second terminal device plays the obtained media segment based on the playing start indication information.

For detailed descriptions of S820 to S825, refer to the related descriptions of S606 and S608 in the foregoing embodiment. Details are not described herein again.

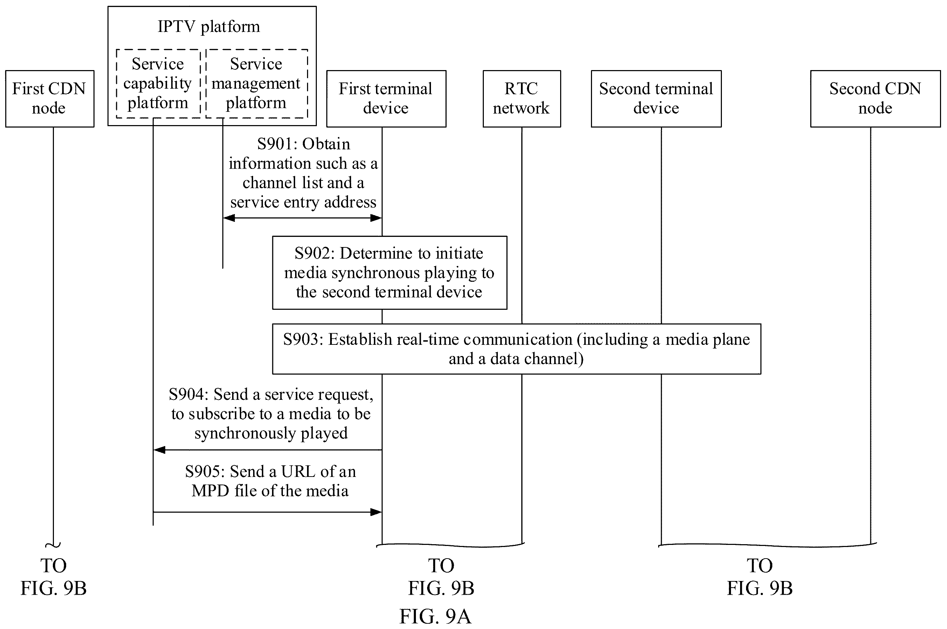

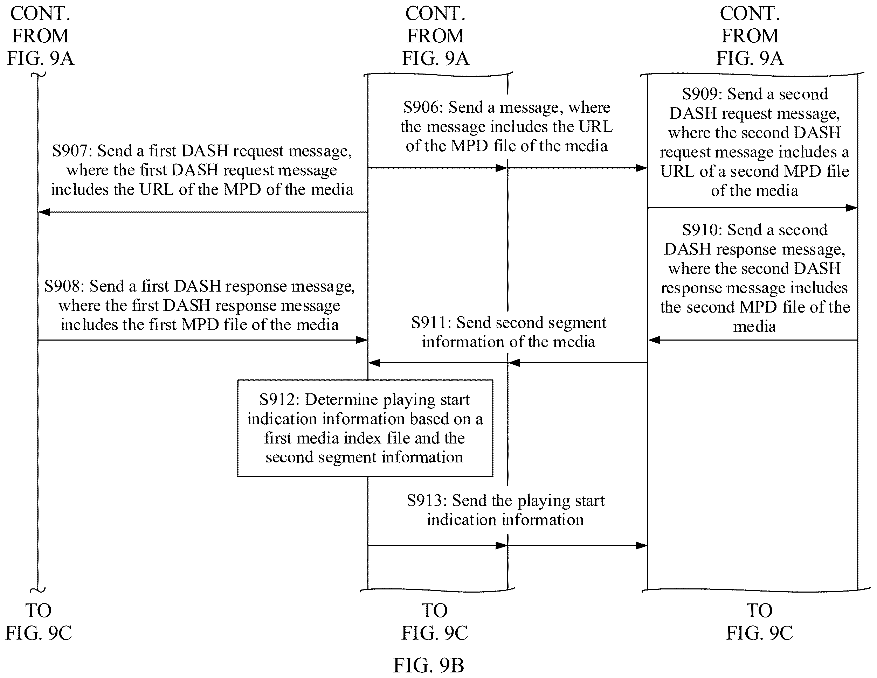

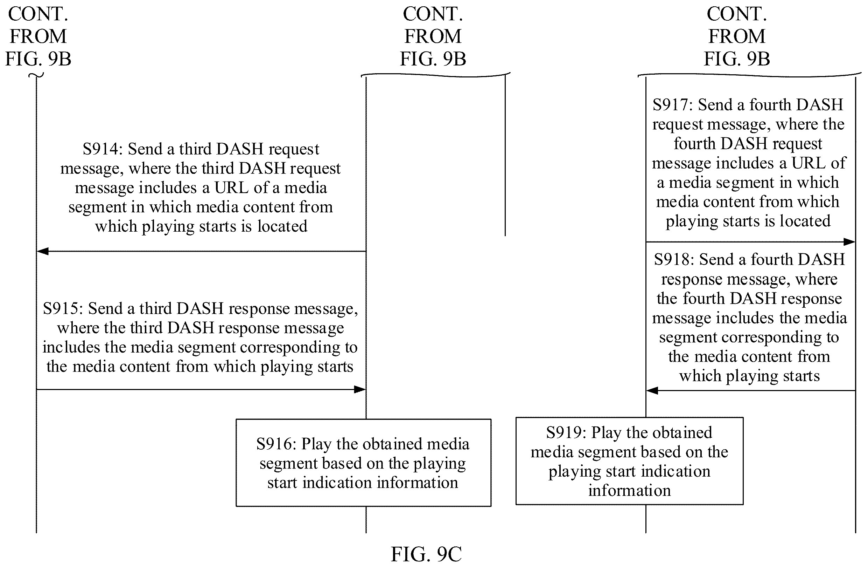

As shown in FIG. 9A to FIG. 9C, when the media streaming protocol is the DASH streaming protocol, a media synchronous playing method provided in an embodiment of this application includes the following steps.

S901: A first terminal device obtains information such as a channel list and a service entry address from a service management platform of an IPTV platform.

S902: The first terminal device determines to initiate media synchronous playing to a second terminal device.

S903: The first terminal device establishes real-time communication (including a media plane and a data channel) with the second terminal device over an RTC network.

S904: The first terminal device sends a service request to a service capability platform of the IPTV platform, where the service request is used to subscribe to a media to be synchronously played.

S905: The service capability platform of the IPTV platform sends a URL of an MPD file of the media to the first terminal device.

In this embodiment of this application, the MPD file includes URLs of media segments at a plurality of bit rates of the media. S905 is implemented by using the message stream marked with ① in FIG. 7.

Similarly, a sequence of performing S903, and S904 and S905 is not limited in this embodiment of this application. S903 may be performed before S904 and S905, S904 and S905 may be performed before S9039, or S903, and S904 and S905 may be performed simultaneously.

S906: The first terminal device sends a message to the second terminal device, where the message includes the URL of the MPD file of the media.

Optionally, the first terminal device may send the URL of the master playlist to the second terminal device by using control plane information of the RTC network, for example, send the URL of the MPD file of the media to the second terminal device by using the message streams marked with ⑤ and ⑦ in FIG. 7. Alternatively, the first terminal device may send the URL of the master playlist to the second terminal device through the established data channel. For example, the first terminal device sends the URL of the MPD file to the second terminal device by using the message streams marked with ⑥ and (8) in FIG. 7.

S907: The first terminal device sends a first DASH request message to a first CDN node, where the first DASH request message includes the URL of the MPD of the media.

The first DASH request message is used to request to obtain the first MPD file, of the media, stored in the first CDN node.

S908: The first CDN node sends a first DASH response message to the first terminal device, where the first DASH response message includes the first MPD file of the media.

In S907 and S908, a process in which the first terminal device interacts with the first CDN node to obtain the first MPD file is specifically that the first terminal device interacts with a first index file server in the first CDN node, to obtain the first MPD file from the first index file server.

S909: The second terminal device sends a second DASH request message to a second CDN node, where the second DASH request message includes a URL of a second MPD file of the media.

The second DASH request message is used to request to obtain the second MPD file, of the media, stored in the second CDN node.

S910: The second CDN node sends a second DASH response message to the second terminal device, where the second DASH response message includes the second MPD file of the media.

In S909 and S910, a process in which the second terminal device interacts with the second CDN node to obtain the second MPD file is specifically that the second terminal device interacts with a second index file server in the second CDN node, to obtain the second MPD file from the second index file server.

S911: The second terminal device sends second segment information of the media to the first terminal device, and correspondingly, the first terminal device receives the second segment information from the second terminal device.

It can be learned from the content of the foregoing embodiment that the second segment information may be a second sequence number of a latest media segment in the second MPD file, or a second start timestamp of the latest media segment in the second MPD file, or the second MPD file.

S912: The first terminal device determines playing start indication information based on a first media index file and the second segment information.

The playing start indication information indicates media content from which playing starts when the media is played.

For detailed descriptions of S912, refer to the descriptions of S818 in the foregoing embodiment. Details are not described herein again.

S913: The first terminal device sends the playing start indication information to the second terminal device, and correspondingly, the second terminal device receives the playing start indication information from the first terminal device.

S914: The first terminal device sends a third DASH request message to the first CDN node, where the third DASH request message includes a URL of a media segment in which the media content from which playing starts is located.

The first terminal device determines the URL of the media segment at a corresponding bit rate based on a current network status or based on a configuration (for example, selecting a lowest bit rate).

The third DASH request message is used to request to obtain a media segment corresponding to the media content from which playing starts. The first terminal device obtains, from the first MPD file based on the playing start indication information, the URL of the media segment in which the media content from which playing starts is located.

S915: The first CDN node sends a third DASH response message to the first terminal device, where the third DASH response message includes the media segment corresponding to the media content from which playing starts.

In S914 and S915, a process in which the first terminal device interacts with the first CDN node to obtain the media segment is specifically that the first terminal device interacts with a first media server corresponding to the first index file server in the first CDN node, to obtain the media segment from the first media server.

S916: The first terminal device plays the obtained media segment based on the playing start indication information.

S917: The second terminal device sends a fourth DASH request message to the second CDN node, where the fourth DASH request message includes a URL of the media segment in which the media content from which playing starts is located.

The second terminal device determines the URL of the media segment at a corresponding bit rate based on a current network status or based on a configuration (for example, selecting a lowest bit rate).

The fourth DASH request message is used to request to obtain a media segment corresponding to the media content from which playing starts. The second terminal device obtains, from the second MPD file based on the playing start indication information, the URL of the media segment in which the media content from which playing starts is located.

S918: The second CDN node sends a fourth DASH response message to the second terminal device, where the fourth DASH response message includes the media segment corresponding to the media content from which playing starts.

In S917 and S918, a process in which the second terminal device interacts with the second CDN node to obtain the media segment is specifically that the second terminal device interacts with a second media server corresponding to the second index file server in the second CDN node, to obtain the media segment from the second media server.

S919: The second terminal device plays the obtained media segment based on the playing start indication information.

For detailed descriptions of S901 to S919, refer to the related descriptions of S801 to S825 in the foregoing embodiment and other content in the foregoing embodiment. Details are not described herein again.

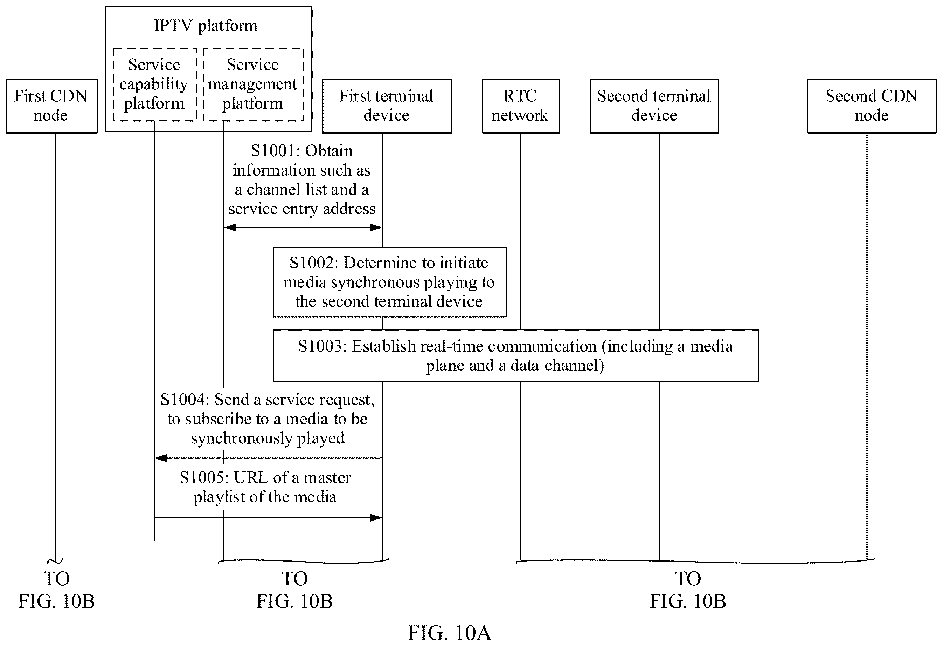

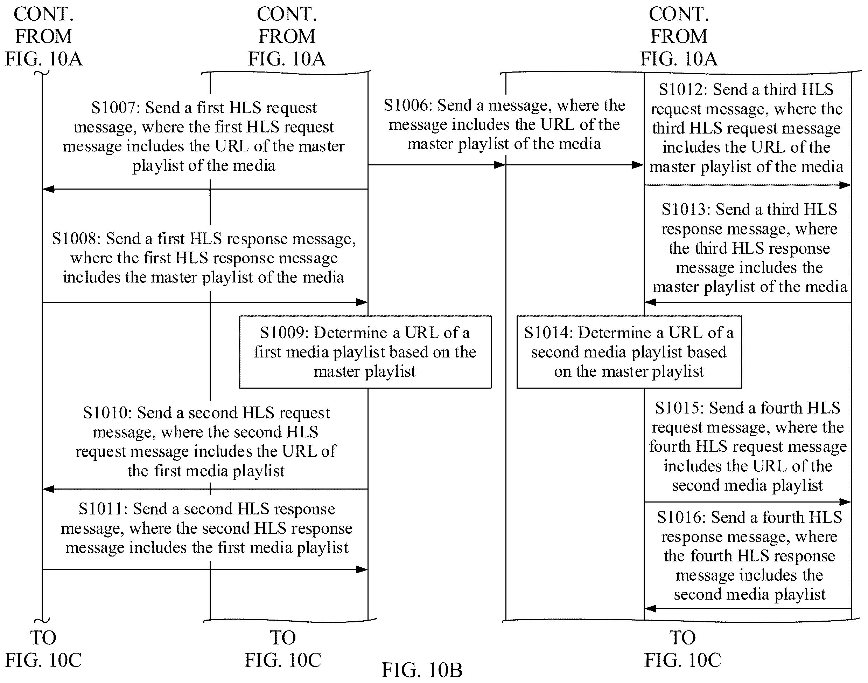

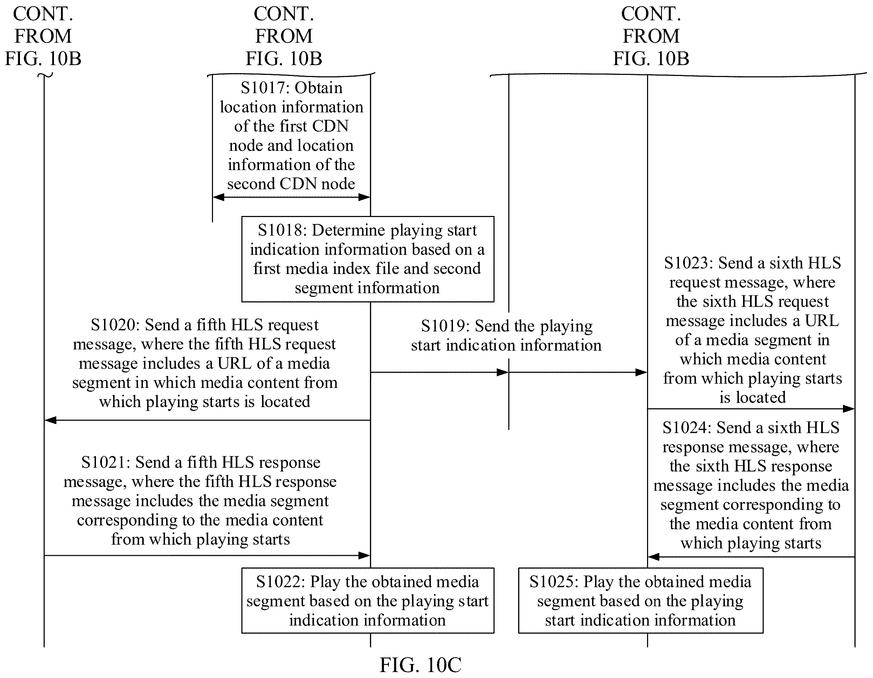

As shown in FIG. 10A to FIG. 10C, when the media streaming protocol is the HLS streaming protocol, a media synchronous playing method provided in an embodiment of this application includes the following steps.

S1001: A first terminal device obtains information such as a channel list and a service entry address from a service management platform of an IPTV platform.

S1002: The first terminal device determines to initiate media synchronous playing to a second terminal device.

S1003: The first terminal device establishes real-time communication (including a media plane and a data channel) with the second terminal device over an RTC network.

S1004: The first terminal device sends a service request to a service capability platform of the IPTV platform, where the service request is used to subscribe to a media to be synchronously played.

S1005: The service capability platform of the IPTV platform sends a URL of a master playlist of the media to the first terminal device.

S1006: The first terminal device sends a message to the second terminal device, where the message includes the URL of the master playlist of the media.

S1007: The first terminal device sends a first HLS request message to a first CDN node, where the first HLS request message includes the URL of the master playlist of the media.

The first HLS request message is used to request to obtain a master playlist stored in the first CDN node.

S1008: The first CDN node sends a first HLS response message to the first terminal device, where the first HLS response message includes the master playlist of the media.

S1009: The first terminal device determines a URL of a first media playlist based on the master playlist.

S1010: The first terminal device sends a second HLS request message to the first CDN node, where the second HLS request message includes the URL of the first media playlist.

The second HLS request message is used to request to obtain a first media playlist stored in the first CDN node.

S1011: The first CDN node sends a second HLS response message to the first terminal device, where the second HLS response message includes the first media playlist.

Similarly, in S1007 and S1008 and S1010 and S1011, a process in which the first terminal device interacts with the first CDN node to obtain the first media playlist is specifically that the first terminal device interacts with a first index file server in the first CDN node, to obtain the first media playlist from the first index file server.

S1012: The second terminal device sends a third HLS request message to a second CDN node, where the third HLS request message includes the URL of the master playlist of the media.

The third HLS request message is used to request to obtain a master playlist stored in the second CDN node.

S1013: The second CDN node sends a third HLS response message to the second terminal device, where the third HLS response message includes the master playlist of the media.

S1014: The second terminal device determines a URL of a second media playlist based on the master playlist.

S1015: The second terminal device sends a fourth HLS request message to the second CDN node, where the fourth HLS request message includes the URL of the second media playlist.

The fourth HLS request message is used to request to obtain a second media playlist stored in the second CDN node.

S1016: The second CDN node sends a fourth HLS response message to the second terminal device, where the fourth HLS response message includes the second media playlist.

In S1012 and S1013 and S1015 and S1016, a process in which the second terminal device interacts with the second CDN node to obtain the second media playlist is specifically that the second terminal device interacts with a second index file server in the second CDN node, to obtain the second media playlist from the second index file server.

S1017: The first terminal device obtains, from the service management platform of the IPTV platform, location information of the first CDN node (or the first index file server) accessed by the first terminal device and location information of the second CDN node (or the second index file server) accessed by the second terminal device.

Specifically, the first terminal device sends, to the IPTV platform, a request message including user information of the first terminal device and user information of the second terminal device, and then the IPTV platform returns, to the first terminal device based on the user information of the terminal devices, the location information of the first CDN node (or the first index file server) and the location information of the second CDN node (or the second index file server). S1017 may be implemented by using the message stream marked with ① in FIG. 7.

For example, location information of a CDN node may be indication information indicating that the CDN node is a CDN node at which layer. For example, the location information of the first CDN node may be indication information indicating that the first CDN node is a core node, and the location information of the second CDN node may be indication information indicating that the second CDN node is an edge node.

S1018: The first terminal device determines second segment information based on the first media index file, the location information of the first CDN node (or the first index file server), and the location information of the second CDN node (or the second index file server).

The playing start indication information indicates media content from which playing starts when the media is played.

For detailed descriptions of S1018, refer to the related descriptions in Manner 2 (including S1 and S2) in S604. Details are not described herein again.

S1019: The first terminal device sends the playing start indication information to the second terminal device, and correspondingly, the second terminal device receives the playing start indication information from the first terminal device.

S1020: The first terminal device sends a fifth HLS request message to the first CDN node, where the fifth HLS request message includes a URL of a media segment in which the media content from which playing starts is located.

The fifth HLS request message is used to request to obtain a media segment corresponding to the media content from which playing starts. The first terminal device obtains, from the first media playlist based on the playing start indication information, the URL of the media segment in which the media content from which playing starts is located.

S1021: The first CDN node sends a fifth HLS response message to the first terminal device, where the fifth HLS response message includes the media segment corresponding to the media content from which playing starts.

In S1020 and S1021, a process in which the first terminal device interacts with the first CDN node to obtain the media segment is specifically that the first terminal device interacts with a first media server corresponding to the first index file server in the first CDN node, to obtain the media segment from the first media server.

S1022: The first terminal device plays the obtained media segment based on the playing start indication information.

S1023: The second terminal device sends a sixth HLS request message to the second CDN node, where the sixth HLS request message includes a URL of the media segment in which the media content from which playing starts is located.

The sixth HLS request message is used to request to obtain a media segment corresponding to the media content from which playing starts. The second terminal device obtains, from the second media playlist based on the playing start indication information, a URL of the media segment in which the media content from which playing starts is located.

S1024: The second CDN node sends a sixth HLS response message to the second terminal device, where the sixth HLS response message includes the media segment corresponding to the media content from which playing starts.

In S1023 and S1024, a process in which the second terminal device interacts with the second CDN node to obtain the media segment is specifically that the second terminal device interacts with a second media server corresponding to the second index file server in the second CDN node, to obtain the media segment from the second media server.

S1025: The second terminal device plays the obtained media segment based on the playing start indication information.

For detailed descriptions of S1001 to S1025, refer to the related descriptions of S801 to S825 in the foregoing embodiment and other content in the foregoing embodiment. Details are not described herein again.

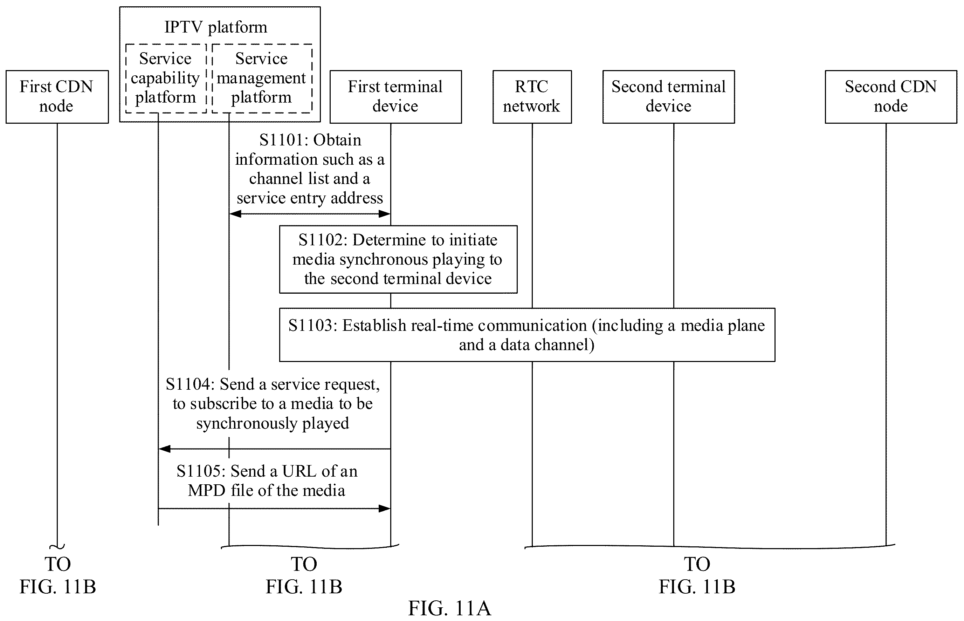

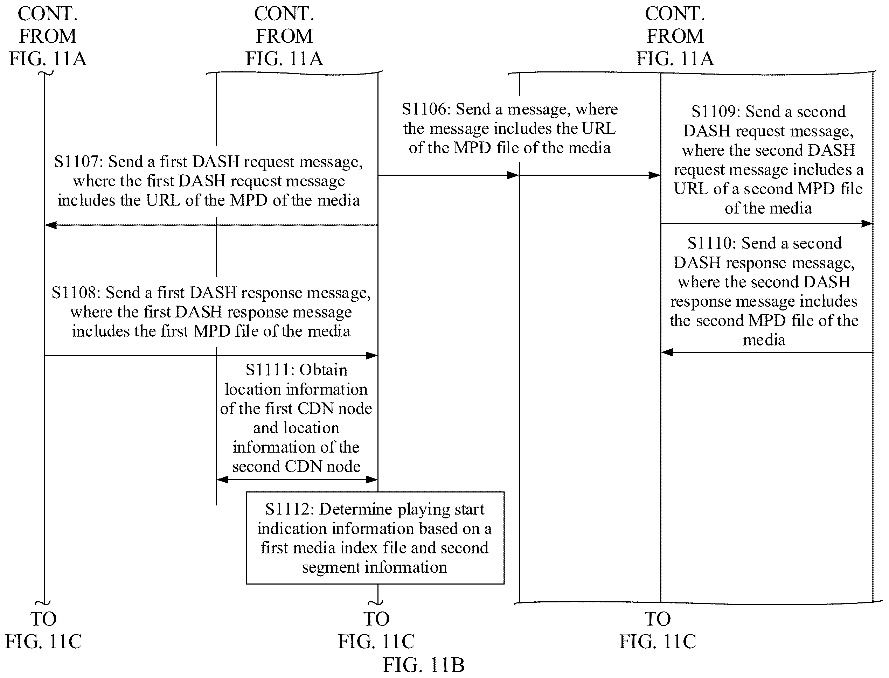

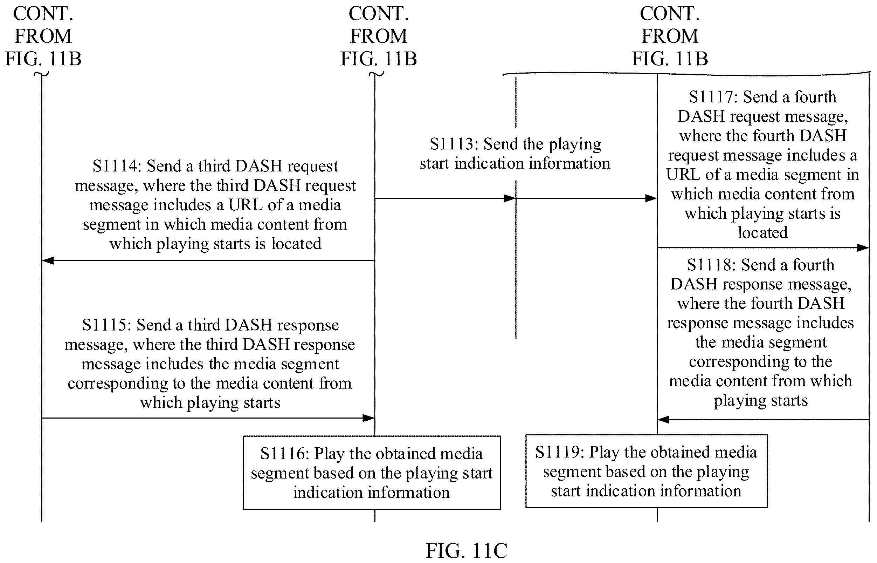

As shown in FIG. 11A to FIG. 11C, when the media streaming protocol is the DASH streaming protocol, a media synchronous playing method provided in an embodiment of this application includes the following steps.

S1101: A first terminal device obtains information such as a channel list and a service entry address from a service management platform of an IPTV platform.

S1102: The first terminal device determines to initiate media synchronous playing to a second terminal device.

S1103: The first terminal device establishes real-time communication (including a media plane and a data channel) with the second terminal device over an RTC network.

S1104: The first terminal device sends a service request to a service capability platform of the IPTV platform, where the service request is used to subscribe to a media to be synchronously played.

S1105: The service capability platform of the IPTV platform sends a URL of an MPD file of the media to the first terminal device.

S1106: The first terminal device sends a message to the second terminal device, where the message includes the URL of the MPD file of the media.

S1107: The first terminal device sends a first DASH request message to a first CDN node, where the first DASH request message includes the URL of the MPD of the media.

The first DASH request message is used to request to obtain the first MPD file, of the media, stored in the first CDN node.

S1108: The first CDN node sends a first DASH response message to the first terminal device, where the first DASH response message includes the first MPD file of the media.

In S1107 and S1108, a process in which the first terminal device interacts with the first CDN node to obtain the first MPD file is specifically that the first terminal device interacts with a first index file server in the first CDN node, to obtain the first MPD file from the first index file server.

S1109: The second terminal device sends a second DASH request message to a second CDN node, where the second DASH request message includes a URL of a second MPD file of the media.

The second DASH request message is used to request to obtain the second MPD file, of the media, stored in the second CDN node.

S1110: The second CDN node sends a second DASH response message to the second terminal device, where the second DASH response message includes the second MPD file of the media.

In S1109 and S1110, a process in which the second terminal device interacts with the second CDN node to obtain the second MPD file is specifically that the second terminal device interacts with a second index file server in the second CDN node, to obtain the second MPD file from the second index file server.

S1111: The first terminal device obtains, from the service management platform of the IPTV platform, location information of the first CDN node (or the first index file server) accessed by the first terminal device and location information of the second CDN node (or the second index file server) accessed by the second terminal device.

S1112: The first terminal device determines second segment information based on the first MPD file, the location information of the first CDN node (or the first index file server), and the location information of the second CDN node (or the second index file server).

The playing start indication information indicates media content from which playing starts when the media is played.

S1113: The first terminal device sends the playing start indication information to the second terminal device, and correspondingly, the second terminal device receives the playing start indication information from the first terminal device.

S1114: The first terminal device sends a third DASH request message to the first CDN node, where the third DASH request message includes a URL of a media segment in which the media content from which playing starts is located.

The third DASH request message is used to request to obtain a media segment corresponding to the media content from which playing starts. The first terminal device obtains, from the first MPD file based on the playing start indication information, the URL of the media segment in which the media content from which playing starts is located.

S1115: The first CDN node sends a third DASH response message to the first terminal device, where the third DASH response message includes the media segment corresponding to the media content from which playing starts.

In S1114 and S1115, a process in which the first terminal device interacts with the first CDN node to obtain the media segment is specifically that the first terminal device interacts with a first media server corresponding to the first index file server in the first CDN node, to obtain the media segment from the first media server.

S1116: The first terminal device plays the obtained media segment based on the playing start indication information.

S1117: The second terminal device sends a fourth DASH request message to the second CDN node, where the fourth DASH request message includes a URL of the media segment in which the media content from which playing starts is located.

The fourth DASH request message is used to request to obtain a media segment corresponding to the media content from which playing starts. The second terminal device obtains, from the second MPD file based on the playing start indication information, the URL of the media segment in which the media content from which playing starts is located.

S1118: The second CDN node sends a fourth DASH response message to the second terminal device, where the fourth DASH response message includes the media segment corresponding to the media content from which playing starts.

In S1117 and S1118, a process in which the second terminal device interacts with the second CDN node to obtain the media segment is specifically that the second terminal device interacts with a second media server corresponding to the second index file server in the second CDN node, to obtain the media segment from the second media server.

S1119: The second terminal device plays the obtained media segment based on the playing start indication information.

For detailed descriptions of S1101 to S1119, refer to the related descriptions of S901 to S919 and S1001 to S1025 in the foregoing embodiment and other content in the foregoing embodiment. Details are not described herein again.

It can be understood that, to implement the foregoing functions, the terminal device includes corresponding hardware structures and/or software modules for executing the functions. A person skilled in the art should easily be aware that, in composition with methods and steps of the examples described in embodiments disclosed in this specification, embodiments of this application may be implemented by hardware or a composition of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, functional modules of the terminal device may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used.

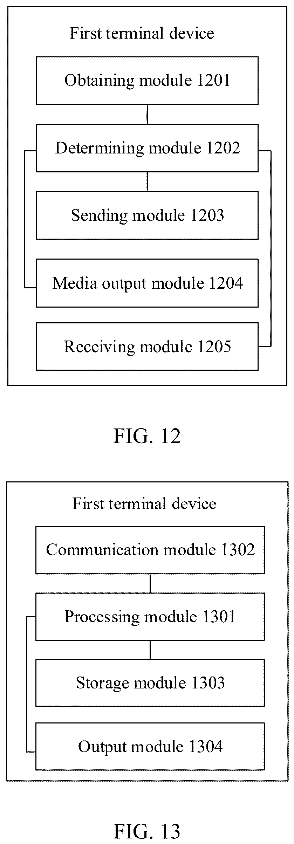

When division into the functional modules is performed in correspondence to the functions, FIG. 12 is a diagram of a possible structure of the terminal device in the foregoing embodiment. The terminal device is a first terminal device, and the first terminal device includes an obtaining module 1201, a determining module 1202, and a sending module 1203.

The obtaining module 1201 is configured to perform S602, S604, S801, S901, S1001, S1017, S1018, S1101, S1111, and S1112 in the foregoing method embodiments. The determining module 1202 is configured to perform S605, S802, S809, S818, S902, S912, S1002, S1009, and S1102 in the foregoing method embodiments. The sending module 1203 is configured to perform S601, S607, S804, S806, S807, S810, S819, S820, S904, S906, S907, S913, S914, S1004, S1006, S1007, S1010, S1019, S1020, S1104, S1106, S1107, S1113, and S1114 in the foregoing method embodiments.

Optionally, the terminal device provided in this embodiment of this application further includes a media output module 1204 and a receiving module 1205. The media output module 1204 is configured to perform S606, S822, S916, S1022, and S1116 in the foregoing method embodiments. The receiving module 1205 is configured to perform S817 and S911 in the foregoing method embodiments.

When an integrated unit is used, FIG. 13 is a diagram of another possible structure of a terminal device in the foregoing embodiment. The terminal device is a first terminal device, and the first terminal device may include a processing module 1301 and a communication module 1302. The processing module 1301 may be configured to control and manage an action of the first terminal device. For example, the processing module 1301 may be configured to support the first terminal device in performing S602, S604, S801, S901, S1001, S1017, S1018, S1101, S1111, S1112, S605, S802, S809, S818, S902, S912, S1002, S1009, and S1102 in the foregoing method embodiments, and/or is configured to perform another process of the technology described in this specification. The communication module 1302 may be configured to support the first terminal device in communicating with another network entity. The communication module 1302 integrates functions of the sending module 1203 and the receiving module 1205. The communication module 1302 may be configured to support the first terminal device in performing S601, S607, S804, S806, S807, S810, S817, S819, S820, S904, S906, S907, S911, S913, S914, S1004, S1006, S1007, S1010, S1019, S1020, S1104, S1106, S1107, S1113, and S1114 in the foregoing method embodiments. Optionally, as shown in FIG. 13, the first terminal device may further include a storage module 1303 configured to store program code and data of the first terminal device.

Optionally, the first terminal device may further include an output module 1304. The output module 1304 may be configured to support the first terminal device in performing S606, S822, S916, S1022, and S1116 in the foregoing method embodiments.

The processing module 1301 may be a processor. For example, the processor may be the processor 510 in FIG. 5. The communication module 1302 may be a transceiver, a transceiver circuit, a communication interface, or the like, for example, the mobile communication module 550 and/or the wireless communication module 560 in FIG. 5. The storage module 1303 may be a memory, for example, the internal memory 521 or the external memory 520 in FIG. 5. It should be understood that when a media is audio, the output module 1304 may be a speaker, for example, the speaker 570A in FIG. 5. When the media is a video, the output module 1304 may be a display, for example, the display 594 in FIG. 5.

The modules of the first terminal device may be further configured to perform other actions in the foregoing method embodiments. All related content of the steps in the foregoing method embodiments may be cited in function descriptions of corresponding functional modules. Details are not described herein again.

For more details about implementing the foregoing functions by the modules included in the first terminal device, refer to the descriptions in the foregoing method embodiment. Details are not described herein again. Embodiments in this specification are all described in a progressive manner, for same or similar parts in embodiments, reference may be made to these embodiments, and each embodiment focuses on a difference from other embodiments.

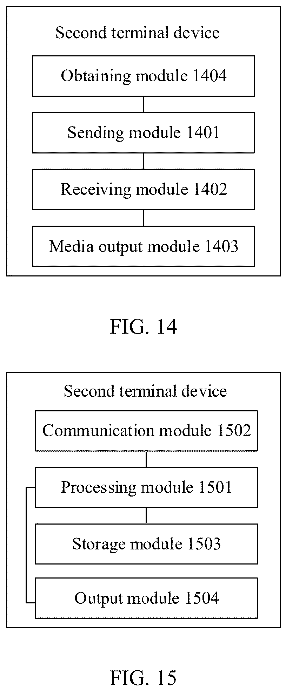

When division into the functional modules is performed in correspondence to the functions, FIG. 14 is a diagram of a possible structure of the terminal device in the foregoing embodiment. The terminal device is a second terminal device, and the second terminal device includes a sending module 1401, a receiving module 1402, and a media output module 1403.

The sending module 1401 is configured to perform S812, S815, S817, S823, S909, S911, S917, S1012, S1015, S1023, S1109, and S1117 in the foregoing method embodiments. The receiving module 1402 is configured to perform S601, S607, S819, and S913 in the foregoing method embodiments. The media output module 1403 is configured to perform S608, S825, S919, S1025, and S1119 in the foregoing method embodiments.

Optionally, the terminal device provided in embodiments of this application further includes an obtaining module 1404. The obtaining module 1404 is configured to perform S603 in the foregoing method embodiment.

When an integrated unit is used, FIG. 15 is a diagram of another possible structure of a terminal device in the foregoing embodiment. The terminal device is a second terminal device, and the second terminal device may include a processing module 1501 and a communication module 1502. The processing module 1501 may be configured to control and manage an action of the second terminal device. For example, the processing module 1501 may be configured to support the second terminal device in performing step 603 or another step in the foregoing method embodiment, and/or another process of the technology described in this specification. The communication module 1502 may be configured to support the second terminal device in communicating with another network entity. The communication module 1302 integrates functions of the sending module 1401 and the receiving module 1402. The communication module 1502 may be configured to support the second terminal device in performing S601, S607, S812, S815, S817, S819, S823, S909, S911, S913, S917, S1012, S1015, S1023, S1109, and S1117 in the foregoing method embodiments. Optionally, as shown in FIG. 15, the second terminal device may further include a storage module 1503 configured to store program code and data of the second terminal device.

Optionally, the first terminal device may further include an output module 1504. The output module 1504 may be configured to support the second terminal device in performing S608, S825, S919, S1025, and S1119 in the foregoing method embodiments.

The processing module 1501 may be a processor. For example, the processor may be the processor 510 in FIG. 5. The communication module 1502 may be a transceiver, a transceiver circuit, a communication interface, or the like, for example, the mobile communication module 550 and/or the wireless communication module 560 in FIG. 5. The storage module 1503 may be a memory, for example, the internal memory 521 or the external memory 520 in FIG. 5. It should be understood that when a media is audio, the output module 1504 may be a speaker, for example, the speaker 570A in FIG. 5. When the media is a video, the output module 1504 may be a display, for example, the display 594 in FIG. 5.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid-state drive, SSD)), or the like.

The foregoing descriptions about implementations allow a person skilled in the art to understand that, for the purpose of convenient and brief description, division into the foregoing functional modules is used as an example for illustration. In actual application, the foregoing functions can be allocated to different modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A media synchronous playing method, comprising:
obtaining, by a first terminal device, a first media index file and second segment information that are of a media, wherein the first media index file is obtained by the first terminal device from a first index file server, and the second segment information is segment information, in a second media index file of the media, obtained by a second terminal device from a second index file server;
determining, by the first terminal device, playing start indication information based on the first media index file and the second segment information, wherein the playing start indication information indicates media content from which playing starts when the media is played; and
sending, by the first terminal device, the playing start indication information to the second terminal device.

2. The method according to claim 1, wherein the method further comprises:
playing, by the first terminal device, the media based on the playing start indication information.

3. The method according to claim 1, wherein
the second segment information is a second sequence number of a latest media segment in the second media index file; or the second segment information is a second start timestamp of the latest media segment in the second media index file; and
the playing start indication information comprises a third sequence number of a media segment in which the media content from which playing starts is located, the third sequence number is less than or equal to a first sequence number and less than or equal to the second sequence number, and the first sequence number is a sequence number of a latest segment in the first media index file; or
the playing start indication information comprises a third start timestamp of the media segment in which the media content from which playing starts is located, the third start timestamp is not later than a first start timestamp and not later than the second start timestamp, and the first start timestamp is a start timestamp of the latest segment in the first media index file; or
the playing start indication information comprises a first offset of a start timestamp of the media content from which playing starts relative to a start timestamp of the media, and the first offset is less than or equal to an offset of the first start timestamp relative to the start timestamp of the media and less than or equal to an offset of the second start timestamp relative to the start timestamp of the media.

4. The method according to claim 1, wherein
the second segment information is segment information of a media segment indicated in the second media index file; and
the playing start indication information comprises first playing start indication information and second playing start indication information, the first playing start indication information comprises a sequence number of a first target media segment in which the media content from which playing starts is located and a second offset of start time of the media content from which playing starts relative to start time of the first target media segment, the first target media segment is one of a media segment indicated in the first media index file, the second playing start indication information comprises a sequence number of a second target media segment in which the media content from which playing starts is located and a third offset of the start time of the media content from which playing starts relative to start time of the second target media segment, and the second target media segment is one of the media segment indicated in the second media index file; or
the playing start indication information comprises a fourth offset of the start time of the media content from which playing starts relative to start time of the media, and the fourth offset is less than or equal to an offset of the start timestamp of the first target media segment relative to the start timestamp of the media and less than or equal to an offset of the start timestamp of the second target media segment relative to the start timestamp of the media.

5. The method according to claim 3, wherein playing, by the first terminal device, the media based on the playing start indication information comprises:
starting, by the first terminal device based on a sequence number of a media segment downloaded from a first media server corresponding to the first index file server, playing from the media segment with the third sequence number; or
determining, by the first terminal device, a fourth sequence number based on the third start timestamp or the first offset, and starting, based on the sequence number of the media segment downloaded from the first media server corresponding to the first index file server, playing from a media segment with the fourth sequence number.

6. The method according to claim 4, wherein playing, by the first terminal device, the media based on the playing start indication information comprises:
downloading, by the first terminal device, the first target media segment from the first media server, and starting playing from first media content in the first target media segment, wherein the first media content is media content corresponding to a fourth timestamp indicated by the second offset; or
determining a fifth sequence number based on the fourth offset, and starting, based on a sequence number of a media segment downloaded from the first media server, playing from second media content in a media segment with the fifth sequence number, wherein the second media content is media content corresponding to a fifth timestamp indicated by the fourth offset.

7. The method according to any one of claims 1 to 6, wherein
the playing start indication information further comprises playing start time information, and the playing start time information indicates system time at which the first terminal device and the second terminal device start to play the media content.

8. The method according to claim 7, wherein playing, by the first terminal device, the media based on the playing start indication information comprises:
when system time reaches the time indicated by the playing start time information, starting, by the first terminal device, to play the downloaded media segment.

9. The method according to any one of claims 1 to 8, wherein before obtaining, by the first terminal device, the first media index file and the second segment information, the method further comprises:
sending, by the first terminal device, a synchronous playing request to the second terminal device, wherein the synchronous playing request is used to request the second terminal device to synchronously play the media with the first terminal device.

10. The method according to any one of claims 1 to 9, wherein obtaining, by the first terminal device, the second segment information of the media comprises:
receiving, by the first terminal device, the second segment information of the media from the second terminal device; or
determining, by the first terminal device, the second segment information based on the first media index file, location information of the first index file server, and location information of the second index file server.

11. The method according to claim 10, wherein determining, by the first terminal device, the second segment information based on the first media index file, the location information of the first index file server, and the location information of the second index file server comprises:
determining, by the first terminal device, a delay between the first index file server and the second index file server based on the location information of the first index file server and the location information of the second index file server; and
determining, by the first terminal device, the second segment information based on the first media index file and the delay between the first index file server and the second index file server.

12. A media synchronous playing method, comprising:
sending, by the second terminal device, second segment information of a media to a first terminal device, wherein the second segment information is segment information, in a second media index file of the media, obtained by the second terminal device from a second index file server;
receiving, by the second terminal device, playing start indication information of the media from the first terminal device, wherein the playing start indication information indicates media content from which playing starts when the media is played, the playing start indication information is determined based on a first media index file and the second segment information that are of the media, and the first media index file is obtained by the first terminal device from a first index file server; and
playing, by the second terminal device, the media based on the playing start indication information.

13. The method according to claim 12, wherein
the second segment information is a second sequence number of a latest media segment in the second media index file; or the second segment information is a second start timestamp of the latest media segment in the second media index file; and
the playing start indication information comprises a third sequence number of a media segment in which the media content from which playing starts is located, the third sequence number is less than or equal to a first sequence number and less than or equal to the second sequence number, and the first sequence number is a sequence number of a latest segment in the first media index file; or
the playing start indication information comprises a third start timestamp of the media segment in which the media content from which playing starts is located, the third start timestamp is not later than a first start timestamp and not later than the second start timestamp, and the first start timestamp is a start timestamp of the latest segment in the first media index file; or
the playing start indication information comprises a first offset of start time of the media content from which playing starts relative to start time of the media, and the first offset is less than or equal to an offset of the first start timestamp relative to the start timestamp of the media and less than or equal to an offset of the second start timestamp relative to the start timestamp of the media.

14. The method according to claim 13, wherein playing, by the second terminal device, the media based on the playing start indication information comprises:
starting, by the second terminal device based on a sequence number of a media segment downloaded from a second media server corresponding to the second index file server, playing from the media segment with the third sequence number; or
determining, by the second terminal device, a fourth sequence number based on the third start timestamp or the first offset, and starting, based on the sequence number of the media segment downloaded from the second media server, playing from a media segment with the fourth sequence number.

15. The method according to claim 12, wherein
the second segment information is segment information of a media segment indicated in the second media index file; and
the playing start indication information comprises a sequence number of a second target media segment in which the media content from which playing starts is located and a third offset of start time of the media content from which playing starts relative to start time of the second target media segment, and the second target media segment is one of the media segment indicated in the second media index file; or
the playing start indication information comprises a fourth offset of the start time of the media content from which playing starts relative to start time of the media, the fourth offset is less than or equal to an offset of a start timestamp of a first target media segment relative to the start timestamp of the media and less than or equal to an offset of the start timestamp of the second target media segment relative to the start timestamp of the media, and the first target media segment is a media segment in which the media content from which playing starts is located in a media segment indicated in the first media index file.

16. The method according to claim 15, wherein playing, by the second terminal device, the media based on the playing start indication information comprises:
downloading, by the second terminal device, the second target media segment from the second media server, and starting playing from third media content in the second target media segment, wherein the third media content is media content corresponding to a sixth timestamp indicated by the third offset; or
determining a sixth sequence number based on the fourth offset, and starting, based on a sequence number of a media segment downloaded from the second media server, playing from fourth media content in a media segment with the sixth sequence number, wherein the fourth media content is media content corresponding to a seventh timestamp indicated by the fourth offset.

17. The method according to any one of claims 12 to 16, wherein
the playing start indication information further comprises playing start time information, and the playing start time information indicates system time at which the first terminal device and the second terminal device start to play the media content.

18. The method according to claim 17, wherein playing, by the second terminal device, the media based on the playing start indication information comprises:
when system time reaches the time indicated by the playing start time information, starting, by the second terminal device, to play the downloaded media segment.

19. The method according to any one of claims 12 to 18, wherein before sending, by the second terminal device, the second segment information of the media to the first terminal device, the method further comprises:
receiving, by the second terminal device, a synchronous playing request sent by the first terminal device, wherein the synchronous playing request is used to request the second terminal device to synchronously play the media with the first terminal device.

20. A terminal device, comprising a memory and at least one processor connected to the memory, wherein the memory is configured to store computer program code, the computer program code comprises computer instructions, and when the computer instructions are executed by the at least one processor, the terminal device is enabled to perform the method according to any one of claims 1 to 11 or perform the method according to any one of claims 12 to 19.

21. A computer-readable storage medium, storing computer instructions, wherein when the computer instructions are run on a computer, the method according to any one of claims 1 to 11 or the method according to any one of claims 12 to 19 is performed.

22. A communication system, comprising a first terminal device, a second terminal device, a first index file server, a second index file server, a first media server, and a second media server, wherein the first terminal device is configured to perform the method according to any one of claims 1 to 11, and the second terminal device is configured to perform the method according to any one of claims 12 to 19.
